# EUROPEAN PATENT SPECIFICATION

(11) **EP 2 031 962 B1**
(45) Date of publication and mention of the grant of the patent: **08.09.2010**
(21) Application number: 07730158.8
(22) Date of filing: 14.06.2007
(51) Int. Cl.: A01N 25/34, A01N 25/10, A01N 53/00, A01P 7/04, A24B 1/02, A01F 25/13

(54) **METHOD AND DEVICE FOR PROTECTING TOBACCO**
VERFAHREN UND VORRICHTUNG VOM SCHUTZ VON TABAK
PROCÉDÉ ET DISPOSITIF DE PROTECTION POUR TABAC

(30) Priority: 14.06.2006 EP 06115497
(43) Date of publication of application: 11.03.2009
(73) Proprietor: BASF SE, 67056 Ludwigshafen (DE)
(72) Inventor: LEININGER, Hartmut, 67434 Neustadt (DE); HUFF, Jürgen, 67063 Ludwigshafen (DE); KARL, Ulrich, 67269 Grünstadt (DE); BREJC, Andrej, 67273 Weisenheim Am Berg (DE); HARMSEN, Sven, 67311 Tiefenthal (DE)
(86) International application number: PCT/EP2007/055891
(87) International publication number: WO 2007/144401

(56) References cited:
- EP-A- 0 320 917
- US-A1- 2005 132 500

## Description

The invention relates to a method of protecting tobacco, tobacco bales or other tobacco products from harmful organisms during harvesting, drying, curing, transport and storage. The invention further relates to a device for carrying out the method.

Tobacco is a valuable cash crop, and is the most widely grown non-food crop in the world.

After harvesting, the tobacco leaves are subjected to the stages of curing, fermenting and aging as part of the process of producing tobaccos suitable for smoking or chewing by humans. All of these stages require extended storage periods, in the last case up to several years. During these storage periods, the tobacco leaves have to be protected from pests, specifically from insect pests.

Nevertheless, contamination of the tobacco with pesticides has to be avoided to create no additional health hazards for the human consumers.

Currently, a common method of pest control in the storage of tobacco is the use of gaseous pesticides, specifically methyl bromide and phosphin (PH₃). However, the use of methyl bromide is not desirable from an ecological point of view as this substance is ozone depleting. Phosphine, on the other hand, is highly toxic and - if not properly handled - is a potential health hazard for the workers engaged in the production of tobacco.

EP-A 0 320 917 discloses the protection of stored tobacco by storing it in a closed container whose inside is covered by a film of a thermo-plastic material that has incorporated in it the insecticide methoprene.

Accordingly, there is a continuous demand to provide new methods for protecting tobacco leaves from harmful organisms, while avoiding pesticide residues in the tobacco and health hazards for the workers.

It has now been found that this demand can be met by providing a method for protecting tobacco from harmful organisms during storage comprising the step of covering the tobacco with a material which has a protective activity against the harmful organisms, wherein the material is a setting.

WO 2005/064072 discloses a composition for the impregnation of fibers, fabrics and nettings imparting a protective activity against pests, however, the use of such a composition for protecting tobacco is not contemplated.

According to the invention, tobacco can be protected from harmful organisms in an easy and efficient way without health hazard to workers and without causing residues of pesticides in the tobacco products.

In a further aspect of the invention there is provided the use of a material which has a protective activity against harmful organisms for protecting tobacco.

In yet a further aspect of the invention there is provided a device for protecting tobacco from harmful organisms comprising a device for storing the tobacco and a material which has a protective activity against harmful organisms, for covering the tobacco.

The term "tobacco" as used herein means tobacco plants or parts thereof in any stage after and during harvesting, specifically in the stages of curing, fermentation and aging.

The terms "protection" or "protecting" as used herein means a controlling or repelling action.

The term "harmful organism" as used herein means pests, specifically arthropod pests, including insects and arachnids, and harmful micro-organisms, specifically fungi including spores, microbes and viruses.

The term "covering" as used herein means that the fabric or netting forms a physical barrier between the tobacco to be protected and the harmful organism, but does not imply that the tobacco is in physical contact with the cover material.

The material is preferably a non-rigid material. It is preferably a textile material or plastics material. The netting material may be prepared by any method known in the art, for example by circular knitting or warp knitting, or by sewing parts of a netting to obtain the desired nettings.

The textile material or plastics material may be made form a variety of natural and synthetic fibers, also as textile blends in woven or non-woven form, as knit goods, yarns or fibers. Natural fibers are for example cotton, wool, silk or bast fibers, like jute, linen, ramie, hemp and kenaf. Synthetic fibers are for example polyamides, polyesters, polyacryl nitriles, polyolefines, for example polypropylene or polyethylene, Teflon, and mixtures of fibers, for example mixtures of synthetic and natural fibers. Polyamides, polyolefins and polyesters are preferred. Polyethylene terephthalate is especially preferred.

The term material also includes non-textile substrates.

Preferably, the material is a textile material or plastics material, e.g. polypropylene, polyethylene, polyester or polyamide.

Suitable mesh sizes are well known to those skilled in the art and may be chosen in view of the size of the prevailing pests. While the mesh size should be small enough to present an obstacle to the pest it is usually preferred to have an exchange of air and humidity.

Suitable mesh sizes are in the range of 5 x 5 mm, preferably 2.5 x 2.5 mm, more preferred 1.5 x 1.5 mm as an upper limit and 0.1 x 0.1 mm, preferably 0.25 x 0.25 mm, more preferred 0.5 x 0.5 mm, in particular 0.75 x 0.75 mm as a lower limit. In the case of very small pests a wide-meshed woven fabric may be preferred as a textile material.

More preferred are nettings made from polyester, especially polyethylene terephthalate. In a further preferred embodiment the material is a cellulose containing material.

Preferably, the material is treated with a composition comprising a pesticide, however, the invention is not limited to such embodiments. E.g., the pesticide can also be incorporated into a fiber during the production of the fiber.

Such materials show good results in controlling the pests and provide long lasting protection to the stored tobacco.

In a preferred embodiment, the pesticide is incorporated into the material (e.g. into the plastics matrix) or applied to the surface of the material or both.

In a most preferred embodiment, the material is treated with a composition comprising:
a) at least one pesticide (component A), and
b) at least one polymeric binder (component B).

The pesticidal composition comprises in general 0.001 to 95 % by weight preferably 0.1 to 45 % by weight, more preferably 0.5 to 30 % by weight, most preferably 0.5 to 25 % by weight, based on the weight of the composition, of at least one pesticide.

The pesticidal composition preferably comprises the following components, based on the solids content of the composition
a) 0.1 to 45 % by weight, preferably 0.5 to 30% by weight, more preferably 1 to 25 % by weight of at least one pesticide (component A), and
b) 55 to 99 % by weight, preferably 70 to 98 % by weight, more preferably 75 to 90 by weight of at least one polymeric binder (component B),
wherein the sum of the components is 100 % by weight of solids content of the insecticide composition.

In a further preferred embodiment the pesticidal composition comprises the following components, based on the solids content of the composition,
a) 20 to 70 % by weight, preferably 25 to 65 % by weight, more preferably 30 to 65 % by weight of at least one pesticide (component A), and
b) 30 to 80 % by weight, preferably 35 to 75 % by weight, more preferably 35 to 70 by weight of at least one polymeric binder (component B),
wherein the sum of the components is 100 % by weight of solids content of the pesticidal composition.

The term "pesticide" as used herein comprises insecticides, repellents and fungicides.

The term "insecticides" as used herein comprises agents with arthropodicidal (specifically, insecticidal, acaricidal and miticidal), molluscicidal and rodenticidal activity, if not otherwise stated in the context.

The term "fungicides" as used herein comprises agents with fungicidal, microbicidal and viricidal activity, if not otherwise stated in the context.

Preferably, the pesticide is an insecticide or repellent.

The pesticidal composition is particularly suitable for application to polyester nettings as used for mosquito nets.

The pesticidal composition of the present invention may be applied to textile materials or plastics material, before their formation into the desired products, i.e. while still a yarn or in sheet form, or after formation of the desired products.

### Pesticide (component A)

Preferably, the pesticide is an insecticide and/or repellent with a fast paralyzing or killing effect of the insect and low mammalian toxicity. Suitable insecticides and/or repellents are known by a person skilled in the art. Suitable insecticides and repellents are disclosed e.g. in E.C. Tomlin et al., The Pesticide Manual, 13ed., The British Crop Protection Council, Farnham 2003, and the literature cited therein.

Preferred insecticides and/or repellents are mentioned below:
pyrethroid compounds such as
   Etofenprox: 2-(4-ethoxyphenyl)-2-methylpropyl-3-phenoxybenzyl ether,
   Chlorfenapyr: 4-bromo-2-(4-chlorophenyl)-1-ethoxymethyl-5-(trifluoromethyl)pyrrole-3-carbonitrile,
   Fenvalerate: (RS)-alpha-cyano-3-phenoxybenzyl (RS)-2-(4-chlorophenyl)-3 methylbutyrate,
   Esfenvalerate: (S)-alpha-cyano-3-phenoxybenzyl (S)-2-(4-chlorophenyl)-3-methylbuty-rate,
   Fenpropathrin: (RS)-alpha-cyano-3-phenoxybenzyl 2,2,3,3-tetramethylcyclopropanecarboxylate,
   Cypermethrin: (RS)-alpha-cyano-3-phenoxybenzyl (1RS)-cis, trans-3-(2,2-dichlorovinyl)-2,2-dimethylcyclopropanecarboxylate,
   alpha-Cypermethrin: racemate comprising the (S)-α-(1R) and (R)-α-(1S) diastereomers,
   Permethrin: 3-phenoxybenzyl (1RS)-cis, trans-3-(2,2-dichlorovinyl)-2,2-dimethylcyclopropanecarboxylate,
   Cyhalothrin: (RS)-alpha-cyano-3-phenoxybenzyl (Z)-(1RS)-cis-3-(2-chloro-3,3,3-trifluoroprop-1-enyl)-2,2-dimethylcyclopro panecarboxylate, lambda-cyhalothrin,
   Deltamethrin: (S)-alpha-cyano-3-phenoxybenzyl (1 R)-cis-3-(2,2-dibromovinyl)-2,2-dimethylcyclopropanecarboxylate,
   Cycloprothrin: (RS)-alpha-cyano-3-phenoxybenzyl (RS)-2,2-dichloro-1-(4-ethoxyphenyl)cyclopropanecarboxylate,
   Fluvalinate: alpha-cyano-3-phenoxybenzyl N-(2-chloro-alpha, alpha, alpha, alpha-trifluoro-p-tolyl)-D-valinate,
   Bifenthrin: (2-methylbiphenyl-3-ylmethyl)0(Z)-(1RS)-cis-3-(2-chloro-3,3,3-trifluoro-1-propenyl)-2,2-dimethylcyclopropanecarboxylate, 2-methyl-2-(4-bromodifluoromethoxyphenyl)propyl (3-phenoxybenzyl)ether,
   Tralomethrin: (S)-alpha-cyano-3-phenoxybenzyl (1R-cis)3((1'RS)(1',2', 2', 2'-tetrabromoethyl))-2,2-dimethylcyclopropanecarboxylate,
   Silafluofen: 4-ethoxyphenyl(3-(4-fluoro-3-phenoxyphenyl)propyl}dimethylsilane,
   D-fenothrin: 3-phenoxybenzyl (1R)-cis, trans)-chrysanthemate,
   Cyphenothrin: (RS)-alpha-cyano-3-phenoxybenzyl (1R-cis, trans)-chrysanthemate, D-resmethrin: 5-benzyl-3-furylmethyl (1 R-cis, trans)-chrysanthemate,
   Acrinathrin: (S)-alpha-cyano-3-phenoxybenzyl (1R-cis(Z))-(2,2-dimethyl-3-(oxo-3-(1,1,1,3,3,3-hexafluoropropyloxy)propenyl(cyclopropanecarboxylate,
   Cyfluthrin: (RS)-alpha-cyano-4-fluoro-3-phenoxybenzyl 3-(2,2-dichlorovinyl)-2,2-dimethylcyclopropanecarboxylate,
   Tefluthrin: 2,3,5,6-tetrafluoro-4-methylbenzyl (1RS-cis (Z))-3-(2-chloro-3,3,3-trifluoro-prop-1-enyl)-2,2-dimethylcyclopropanecarboxylate,
   Transfluthrin: 2,3,5,6-tetrafluorobenzyl (1 R-trans)-3-(2,2-dichlorovinyl)-2,2-dimethylcyclopropanecarboxylate,
   Tetramethrin: 3,4,5,6-tetrahydrophthalimidomethyl (1 RS)-cis, trans-chrysanthemate, Allethrin: (RS)-3-allyl-2-methyl-4-oxocyclopent-2-enyl (1RS)-cis, trans-chrysanthemate,
   Prallethrin: (S)-2-methyl-4-oxo-3-(2-propynyl)cyclopent-2-enyl (1R)-cis, trans-chrysanthemate,
   Empenthrin: (RS)-1-ethynyl-2-methyl-2-pentenyl (1 R)-cis,trans-chrysanthemate,
   Imiprothrin: 2,5-dioxo-3-(prop-2-ynyl)imidazolidin-1-ylmethyl (1R)-cis, trans-2,2-dimethyl-3-(2-methyl-1-propenyl)-cyclopropanecarboxylate,
   D-flamethrin: 5-(2-propynyl)-furfuryl (1R)-cis, trans-chrysanthemate, and 5-(2-propynyl)furfuryl 2,2,3,3-tetramethylcyclopropanecarboxylate;
   Pyriproxyfen: 4-phenoxyphenyl (*RS*)-2-(2-pyridyloxy)propyl ether; pyrethrum;
   d-d, trans-cyphenothrin: (*RS*)-α-cyano-3-phenoxybenzyl(1*RS*,3*RS*;1*RS*,3*SR*)-2,2-dimethyl-3-(2-methylprop-1-enyl)cyclopropanecarboxylate;
Carbamate compounds such as
   Alanycarb: S-methyl-N[[N-methyl-N-[N-benzyl-N(2-ethoxy-carbonylethyl)aminothio]carbamoyl]thioacetimidate,
   Bendiocarb: 2,2-dimethyl-1,3-benzodioxol-4-yl-methylcarbamate),
      Carbaryl(1-naphthyl N-methylcarbamate,
   Isoprocarb: 2-(1-methylethyl)phenyl methylcarbamate,
   Carbosulfan: 2,3 dihydro-2,2-dimethyl-7-benzofuranyl[(dibutylamino)thio]methyl-carbamate,
   Fenoxycarb: Ethyl[2-(4-phenoxyphenoxy)ethyl]carbamate,
   Indoxacarb: Methyl-7-chloro-22,3,4°,5-tetrahydro-2-[methoxycarbonyl (-4-trifluoromethoxyphenyl)]
   Propoxur: 2-isopropyloxyphenol methylcarbamate,
   Pirimicarb: 2-dimethylamino-5,6-dimethyl-4-pyrimidinyl-dimethylcarbamate,
   Thiodiocarb: Dimethyl N,N'(thiobis((methylimino)carbonoyloxy)bisethanimidiothioate).
   Methomyl: S-methyl N-((methylcarbamoyl)oxy)thioacetamidate,
   Ethiofencarb: 2-((ethylthio)methyl)phenyl methylcarbamate,
   Fenothiocarb: S-(4-phenoxybutyl)-N,N-dimethyl thiocarbamate,
   Cartap: S,S'-(2-5 dimethylamino)trimethylene)bis (thiocarbamate)hydrochloride, Fenobucarb: 2-sec-butylphenylmethyl carbamate,
   XMC: 3,5-dimethylphenyl-methyl carbamate,
   Xylylcarb: 3,4-dimethylphenylmethylcarbamate;
organophosphorous compounds such as
   Trichlorfon: Phosphoric acid, (2,2,2-trichloro-1-hydroxyethyl)-, dimethyl ester
   Fenitrothion: O,O-dimethyl O-(4-nitro-m-tolyl)phosphorothioate,
   Diazinon: O,O-diethyl-O-(2-isopropyl-6-methyl-4-pyrimidinyl)phosphorothioate, Pyridaphenthion: O-(1,6-dihydro-6-oxo-1-phenylpyrazidin-3-yl) O,O-diethyl phosphorothioate,
   Pirimiphos-Etyl: O,O-diethyl O-(2-(diethylamino)6-methyl-pyrimidinyl)phosphorothioate,
   Pirimiphos-Methyl: O-[2-(diethylamino)-6-methyl-4 pyrimidinyl] O,O-dimethyl phosphorothioate,
   Etrimphos: O-6-ethoxy-2-ethyl-pyrimidin-4-yl-O,O-dimethyl-phosphorothioate,
   Fenthion: O,O-dimethyl-O-[-3-methyl-4-(methylthio)phenyl phosphorothioate,
   Phoxim: 2-(diethoxyphosphinothoyloxyimino)-2-phenylacetonitrile,
   Chlorpyrifos: O,O-diethyl-O-(3,5,6-trichloro-2-pyrinyl)phosphorothioate,
   Chlorpyriphosmethyl: O,O-dimethyl O-(3,5,6-trichloro-2-pyridinyl)phosphorothioate,
   Cyanophos: O,O-dimethyl O-(4 cyanophenyl)phosphorothioate,
   Pyraclofos: (R,S)[4-chlorophenyl)-pyrazol-4-yl]-O-ethyl-S-n-propyl phosphorothioate,
   Acephate: O, S-dimethyl acetylphosphoroamidothioate,
   Azamethiphos: S-(6-chloro-2,3-dihydro-oxo-1,3-oxazolo[4,5-b]pyridine-3-ylmethyl phosphorothioate,
   Malathion: O,O-dimethyl phosphorodithioate ester of diethyl mercaptosuccinate,
   Temephos: (O,O'(thiodi-4-1-phenylene) O,O,O,O-tetramethyl phosphorodithioate,
   Dimethoate: ((O,O-dimethyl S-(n-methylcarbamoylethyl)phosphorodithioate,
   Formothion: S[2-formylmethylamino]-2-oxoethyl]-O,O-dimethyl phosphorodithioate,
   Phenthoate: O,O-dimethyl S-(alpha-ethoxycarbonylbenzal)-phosphorodithioate;
   lodofenphos: O-(2,5-dichloro-4-iodophenyl)-O,O-dimethyl-phosphorthioate.
Insecticides with a sterilising effect on adult mosquitoes such as
   1-(alfa-(chloro-alpha-cyclopropylbenzylidenamino-oxy)-p-tolyl)-3-(2,6-difluorobenzoyl)urea, Diflubenzuron: N-(((3,5-dichloro-4-(1,1,2,2-tetraflouroethoxy)phenylamino)carbonyl)2,6 difluoro benzamid,
   Triflumuron: 2-Chloro-N-(((4-(trifluoromethoxy)phenyl)-amino-)carbonyl)benzamide, or a triazin such as N-cyclopropyl-1,3,5-triazine-2,4,6-triamin; and
   Lambda-cyhalothrine:
      α-cyano-3-phenoxybenzyl-3-(2-chloro-3,3,3-trifluoroprop-1-enyl)-2,2-dimethylcyclopropane carboxylate, as a 1:1 mixture of (Z)-(1R,3R), R-ester and (Z)-(1S,3S), S-ester.

The repellent is preferably selected from N,N-Diethyl-meta-toluamide (DEET), N,N-diethylphenylacetamide (DEPA), 1-(3-cyclohexan-1-yl-carbonyl)-2-methylpiperine, (2-hydroxymethylcyclohexyl) acetic acid lactone, 2-ethyl-1,3-hexandiol, indalone, Methyl-neodecanamide (MNDA), a pyrethroid not used for insect control such as {(+/-)-3-allyl-2-methyl-4-oxocyclopent-2-(+)-enyl-(+)-trans-chrysantemate (Esbiothrin), a repellent derived from or identical with plant extracts like limonene, eugenol, (+)-Eucamalol (1), (-)-1-epi-eucamalol or crude plant extracts from plants like Eucalyptus maculata, Vitex rotundifolia, Cymbopogan martinii, Cymbopogan citratus (lemon grass), Cymopogan nartdus (citronella), IR3535 (ethyl butylacetylaminopropionate), icaridin (1-piperidinecarboxylic acid 2-(2-hydroxyethyl)-1-methylpropylester).

A suitable molluscicide is for example niclosamide.

Suitable rodenticides are first generation anticoagulant rodenticides and second generation anticoagulant rodenticides, where second generation rodenticides are preferred. Examples for first generation anticoagulant rodenticides are warfarin, chlorphacinone, coumatetralyl, suitable second generation anticoagulant rodenticides are for example flocoumafen, brodifacoum, difenacoum, bromadialone, difethialone, and bromethalin.

### Suitable fungicides are for example

Azoles such as Bitertanol, Bromoconazole, Cyproconazole, Difenoconazole, Dinitroconazole, Epoxiconazole, Fenbuconazole, Fluquiconazole, Flusilazole, Flutriafol, Hexaconazole, Imazalil, Ipconazole, Metconazole, Myclobutanil, Penconazole, Propiconazole, Prochloraz, Prothioconazole, Simeconazole, Tebuconazole Tetraconazol, Triadimefon, Triadimenol, Triflumizol, Triticonazol;
Strobilurines such as Azoxystrobin, Dimoxystrobin, Fluoxastrobin, Kresoxim-methyl, Metominostrobin, Orysastrobin, Picoxystrobin, Pyraclostrobin and Trifloxystrobin; Acylalanines such as Benalaxyl, Metalaxyl, Mefenoxam, Ofurace, Oxadixyl; Aminderivatives such as Aldimorph, Dodine, Dodemorph, Fenpropimorph, Fenpropidin, Guazatine, Iminoctadine, Spiroxamin, Tridemorph;
Anilinopyrimidines such as Pyrimethanil, Mepanipyrim, Cyprodinil;
Dicarboximide such as Iprodion, Myclozolin, Procymidon, Vinclozolin;
Cinnamic amides and derivatives such as Dimethomorph, Flumetover, Flumorph; Antibiotics as Cycloheximide, Griseofulvin, Kasugamycin, Natamycin, Polyoxin, Streptomycine;
Dithiocarbamates such as Ferbam, Nabam, Maneb, Mancozeb, Metam, Metiram, Propineb, Polycarbamat, Thiram, Ziram Zineb;
Heterocyclic compounds such as Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Picobenzamid, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine M Anorganika;
Nitrophenylderivatives such as Binapacryl, Dinocap, Dinobuton, Nitrophthal-isopropyl; Phenylpyrroles such as Fenpiclonil, Fludioxonil;

Derivatives of sulfenic acid such as Captafol, Captan, Dichlofluanid, Folpet, Tolylfluanid; Other fungicides such as Acibenzolar-S-methyl, Benthiavalicarb, Carpropamid, Chlorothalonil, Cyflufenamid, Cymoxanil, Dazomet, Diclomezin, Diclocymet, Diclofluanid, Diethofencarb, Edifenphos, Ethaboxam, Fenhexamid, Fentin-Acetat, Fenoxanil, Ferimzone, Fluazinam, Fosetyl, Fosetyl-Aluminium, Phosphoric Acid, Iprovalicarb, Hexachlorbenzene, Metrafenon, Pencycuron, Propamocarb, Phthalid, Toloclofos- methyl, Quintozene, Zoxamid.

In a further preferred embodiment, the pesticide is at least one N-arylhydrazine derivative, preferably of formula I, 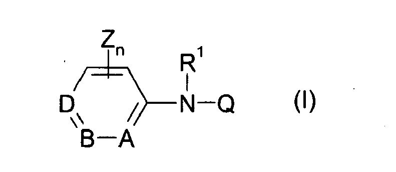 wherein
A is C-R² or N;
B is C-R³ or N;
D is C-R⁴ or N;
with the proviso that at least one of A, B or D must be other than N;
Z is halogen, CN, NO₂, C₁-C₆-alkyl, C₁-C₆-haloalkyl, C₁-C₆-alkoxy or C₁-C₆-haloalkoxy; n is an integer of 0, 1 or 2;
Q is 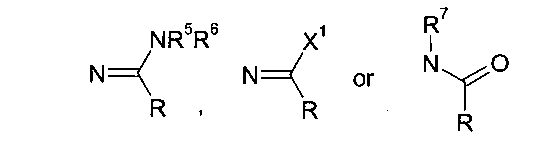 wherein
R is
hydrogen;
C₁-C₁₀-alkyl, optionally substituted with one or more halogens; C₃-C₆-cycloalkyl; C₁-C₄-alkoxy; C₁-C₄-haloalkoxy; (C₁-C₄-alkyl)SOₓ; (C₁-C₄-haloalkyl)SOₓ; phenyl, optionally substituted with one to three halogen, C₁-C₄-alkyl, C₁-C₄-haloalkyl, C₁-C₄-alkoxy, C₁-C₄-haloalkoxy, (C₁-C₄-alkyl)SOₓ, (C₁-C₄-haloalkyl)SOₓ, NO₂ or CN groups; phenoxy, optionally substituted with one to three halogen, C₁-C₄-alkyl, C₁-C₄-haloalkyl, C₁-C₄-alkoxy, C₁-C₄-haloalkoxy, (C₁-C₄-alkyl)SO_{X}, (C₁-C₄-haloalkyl)SOₓ, NO₂ or CN groups;
C₃-C₁₂-cycloalkyl, optionally substituted with one or more halogens, C₁-C₆-alkyl, C₁-C₆-haloalkyl, C₁-C₄-alkoxy, C₁-C₄-haloalkoxy, (C₁-C₄-alkyl)SOₓ, (C1-C4-haloalkyl)SOₓ; phenyl, optionally substituted with one to three halogen, C₁-C₄-alkyl, C₁-C₄-haloalkyl, C₁-C₄-alkoxy, C₁-C₄-haloalkoxy, NO₂ or CN groups; phenoxy, optionally substituted with one to three halogen, C₁-C₄-alkyl, C₁-C₄-haloalkyl, C₁-C₄-alkoxy, C₁-C₄-haloalkoxy, NO₂ or CN groups;
or
phenyl, optionally substituted with one or more halogens, C₁-C₄-alkyl, C₁-C₄-haloalkyl, C₁-C₄-alkoxy, C₁-C₄-haloalkoxy, NO₂ or CN groups;
or
CR¹⁷R¹⁸R¹⁹;
R¹⁷ and R¹⁸ are each independently C₁-C₆-alkyl, C₃-C₆-alkenyl, C₃-C₆-alkynyl, or C₃-C₆-cycloalkyl which may be substituted with 1 to 3 halogen atoms;
R¹⁹ is hydrogen or C₁-C₆-alkyl;
R¹ and R⁷ are each independently hydrogen or C₁-C₄-alkyl;
R⁵ and R⁶ are each independently
hydrogen;
C₁-C₁₀-alkyl, optionally substituted with one or more halogen, hydroxy, C₁-C₄-alkoxy, (C₁-C₄-alkyl)SOₓ, CONR⁸R⁹, CO₂R¹⁰, R¹¹, R¹²;
C₃-C₁₀-alkenyl, optionally substituted with one or more halogen, hydroxy, C₁-C₄-alkoxy, (C₁-C₄-alkyl)SOₓ, CONR⁸R⁹, CO₂R¹⁰, R¹¹, R¹²;
C₃-C₁₀-alkynyl, optionally substituted with one or more halogen, hydroxy, C₁-C₄-alkoxy, (C₁-C₄-alkyl)SOₓ, CONR⁸R⁹, CO₂R¹⁰, R¹¹, R¹²;
C₃-C₁₂-cycloalkyl, optionally substituted with one or more halogen, hydroxy, C₁-C₄-alkoxy, (C₁-C₄-alkyl)SOₓ, CONR⁸R⁹, CO₂R¹⁰, R¹¹, R¹²;
C₃-C₆-cycloalkyl, optionally substituted with one to three halogen, C₁-C₄-alkyl, C₁-C₄-haloalkyl, C₁-C₄-alkoxy, C₁-C₄-haloalkoxy, NO₂ or CN groups;
phenyl, optionally substituted with one or more halogen, C₁-C₄-alkyl, C₁-C₄-haloalkyl, C₁-C₄-alkoxy, C₁-C₄-haloalkoxy, NO₂ or CN groups;
pyridyl, optionally substituted with one or more halogen, C₁-C₄-alkyl, C₁-C₄-haloalkyl, C₁-C₄-alkoxy, C₁-C₄-haloalkoxy, NO₂ or CN groups;
R⁵ and R⁶ may be taken together to form a ring represented by the structure 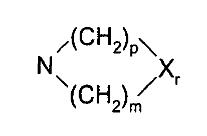 R², R³ and R⁴ are each independently hydrogen, halogen, CN, NO₂, (C₁-C₄-alkyl)SOₓ, (C₁-C₄-haloalkyl)SOₓ, C₁-C₆-alkyl, C₁-C₆-haloalkyl, C₁-C₆-alkoxy or C₁-C₆-haloalkoxy;
R⁸, R⁹ and R¹⁰ are each independently hydrogen or C₁-C₄-alkyl;
R¹¹ is NR¹³R¹⁴, 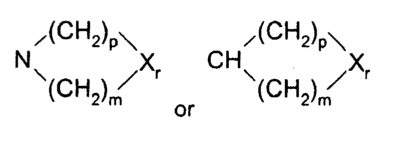 R¹² is 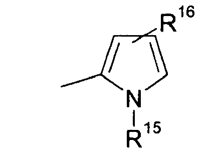 R¹³ , R¹⁴, R¹⁵ and R¹⁶ are each independently hydrogen or C₁-C₄-alkyl;
X is O, S or NR¹⁵;
X¹ is chlorine, bromine or fluorine;
r is an integer of 0 or 1;
p and m are each independently an integer of 0, 1, 2 or 3, with the proviso that only one of p, m or r can be 0 and with the further proviso that the sum of p + m + r must be 4, 5 or 6;
x is an integer of 0, 1 or 2; or
the enantiomers or the salts thereof.

In a preferred embodiment Q in formula I is

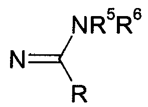

More preferably, the least one N-arylhydrazine derivative is a compound of formula Ia 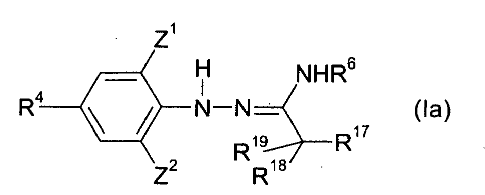 wherein
R⁴ is chlorine or trifluoromethyl;
Z¹ and Z² are each independently chlorine or bromine;
R⁶ is C₁-C₆-alkyl, C₃-C₆-alkenyl, C₃-C₆-alkynyl, or C₃-C₆-cycloalkyl which may be substituted with 1 to 3 halogen atoms, or C₂-C₄-alkyl which is substituted by C₁-C₄-alkoxy;
R¹⁷ and R¹⁸ are each independently C₁-C₆-alkyl, C₃-C₆-alkenyl, C₃-C₆-alkynyl, or C₃-C₆-cycloalkyl which may be substituted with 1 to 3 halogen atoms;
R¹⁹ is hydrogen or C₁-C₆-alkyl;
or enantiomers or salts thereof.

In the definition of formula I and formula la shown above, the substituents have the following meanings:
"Halogen" will be taken to mean fluoro, chloro, bromo and iodo.

The term "alkyl" as used herein refers to a branched or unbranched saturated hydrocarbon group having 1 to 4 or 6 carbon atoms, especially C₁-C₆-alkyl such as methyl, ethyl, propyl, 1-methylethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl and 1-ethyl-2-methylpropyl.

"Alkoxy" refers to a straight-chain or branched alkyl group having 1 to 4 carbon atoms (methyl, ethyl, propyl, 1-methylethyl, butyl, 1-methylpropyl, 2-methylpropyl, 1,1-dimethylethyl) bonded through an oxygen linkage, at any bond in the alkyl group. Examples include methoxy, ethoxy, propoxy, and isopropoxy.

"Cycloalkyl" refers to a monocyclic 3- to 6-membered saturated carbon atom ring, i.e. cyclopropyl, cyclobutyl, cyclopentyl, and cyclohexyl.

With respect to the intended use of the compounds of formula I, particular preference is given to the following meanings of the substituents, in each case on their own or in combination:
Preference is given to compounds of formula I wherein R⁴ is trifluoromethyl.

Preference is further given to compounds of formula I wherein Z¹ and Z² are both chlorine.

Moreover, preferred are compounds of formula I wherein R⁶ is C₁-C₆-alkyl, especially ethyl.

Preference is further given to compounds of formula I wherein R¹⁷ and R¹⁸ are both methyl.

Moreover, preferred are compounds of formula I wherein R¹⁷ and R¹⁸ form a cyclopropyl ring which is unsubstituted or substituted by 1 to 3 halogen atoms, especially chlorine and bromine.

Moreover, particularly preferred are compounds of formula I wherein R¹⁷ and R¹⁸ form a cyclopropyl ring which is substituted by 2 halogen atoms.

Moreover, particularly preferred are compounds of formula I wherein R¹⁷ and R¹⁸ form a cyclopropyl ring which is substituted by 2 chlorine atoms.

Particularly preferred are compounds of formula I wherein R¹⁷ and R¹⁸ form a 2,2-dichlorocyclopropyl ring.

Preference is further given to compounds of formula I wherein R¹⁹ is C₁-C₆ alkyl, especially methyl.

Particularly preferred are compounds of formula I wherein R¹⁷, R¹⁸ and R¹⁹ are all methyl.

Moreover, particularly preferred are compounds of formula I wherein R¹⁷, R¹⁸ and R¹⁹ form a moiety 1-methyl-2,2-dichlorocyclopropyl.

Preference is further given to compounds of formula I wherein
R⁴ is trifluoromethyl;
Z¹ and Z² are each independently chlorine or bromine;
R⁶ is C₁-C₆-alkyl;
R¹⁷ and R¹⁸ are C₁-C₆-alkyl or may be taken together to form C₃-C₆-cycloalkyl which is substituted by 1 to 2 halogen atoms;
R¹⁹ is C₁-C₆-alkyl;
or the enantiomers or salts thereof.

Particular preference is given to N-ethyl-2,2-dimethylpropionamide-2-(2,6-dichloro-α,α,α-trifluoro-p-tolyl)hydrazone and N-ethyl-2,2-dichloro-1-methylcyclopropane-carboxamide, 2-(2,6-dichloro-α,α,α -trifluoro-p-tolyl)hydrazone.

Furthermore, particular preference with respect to the use in the present invention is given to the compound of formula Ia-1 (N-ethyl-2,2-dimethylpropionamide-2-(2,6-dichloro-α,α,α - trifluoro-p-tolyl)-hydrazone):

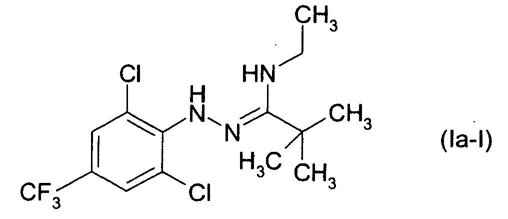

Moreover, particular preference with respect to the use in the present invention is given to the compound of formula la-2 (N-Ethyl-2,2-dichloro-1-methylcyclo-propanecarboxamide-2-(2,6-dichloro-α,α,α -tri-fluoro-p-tolyl)hydrazone):

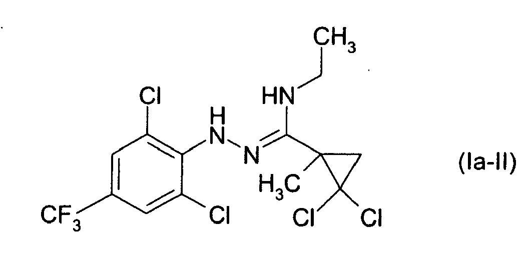

With respect to their use, particular preference is given to the compounds la-A compiled in the tables below. Moreover, the groups mentioned for a substituent in the tables are on their own, independently of the combination in which they are mentioned, a particularly preferred embodiment of the substituent in question.

With respect to their use, particular preference is also given to the hydrochloric acid, maleic acid, dimaleic acid, fumaric acid, difumaric acid, methane sulfenic acid, methane sulfonic acid, and succinic acid adducts of the compounds of the tables below.

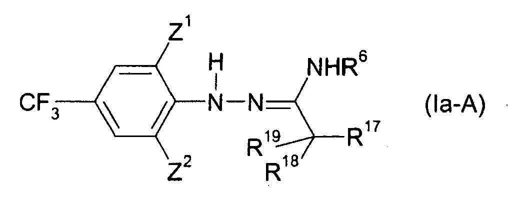

**Table A**

| **No.** | **R⁶** | **R¹⁷** | **R¹⁸** | **R¹⁹** | **Z¹** | **Z²** |
|---|---|---|---|---|---|---|
| A-1 | CH₃ | 2,2-dichlorocyclopropyl | | H | Cl | Cl |
| A-2 | CH₃ | 2,2-dibromocyclopropyl | | H | Cl | Cl |
| A-3 | CH₃ | CH₃ | CH₃ | CH₃ | Cl | Cl |
| A-4 | CH₃ | CH₂CH₃ | CH₃ | CH₃ | Cl | Cl |
| A-5 | CH₃ | 2,2-dichlorocyclopropyl | | CH₃ | Cl | Cl |
| A-6 | CH₃ | 2,2-dibromocyclopropyl | | CH₃ | Cl | Cl |
| A-7 | CH₃ | 2,2-dichlorocyclopropyl | | H | Br | Br |
| A-8 | CH₃ | 2,2-dibromocyclopropyl | | H | Br | Br |
| A-9 | CH₃ | CH₃ | CH₃ | CH₃ | Br | Br |
| A-10 | CH₃ | CH₂CH₃ | CH₃ | CH₃ | Br | Br |
| A-11 | CH₃ | 2,2-dichlorocyclopropyl | | CH₃ | Br | Br |
| A-12 | CH₃ | 2,2-dibromocyclopropyl | | CH₃ | Br | Br |
| A-13 | CH₂CH₃ | 2,2-dichlorocyclopropyl | | H | Cl | Cl |
| A-14 | CH₂CH₃ | 2,2-dibromocyclopropyl | | H | Cl | Cl |
| A-15 | CH₂CH₃ | CH₃ | CH₃ | CH₃ | Cl | Cl |
| A-16 | CH₂CH₃ | CH₂CH₃ | CH₃ | CH₃ | Cl | Cl |
| A-17 | CH₂CH₃ | 2,2-dichlorocyclopropyl | | CH₃ | Cl | Cl |
| A-18 | CH₂CH₃ | 2,2-dibromocyclopropyl | | CH₃ | Cl | Cl |
| A-19 | CH₂CH₃ | 2,2-dichlorocyclopropyl | | H | Br | Br |
| A-20 | CH₂CH₃ | 2,2-dibromocycloprooyl | | H | Br | Br |
| A-21 | CH₂CH₃ | CH₃ | CH₃ | CH₃ | Br | Br |
| A-22 | CH₂CH₃ | CH₂CH₃ | CH₃ | CH₃ | Br | Br |
| A-23 | CH₂CH₃ | 2,2-dichlorocyclopropyl | | CH₃ | Br | Br |
| A-24 | CH₂CH₃ | 2,2-dibromocyclopropyl | | CH₃ | Br | Br |
| A-25 | CH₂CH₂CH₃ | 2,2-dichlorocyclopropyl | | H | Cl | Cl |
| A-26 | CH₂CH₂CH₃ | 2,2-dibromocyclopropyl | | H | Cl | Cl |
| A-27 | CH₂CH₂CH₃ | CH₃ | CH₃ | CH₃ | Cl | Cl |
| A-28 | CH₂CH₂CH₃ | CH₂CH₃ | CH₃ | CH₃ | Cl | Cl |
| A-29 | CH₂CH₂CH₃ | 2,2-dichlorocyclopropyl | | CH₃ | Cl | Cl |
| A-30 | CH₂CH₂CH₃ | 2,2-dibromocyclopropyl | | CH₃ | Cl | Cl |
| A-31 | CH₂CH₂CH₃ | 2,2-dichlorocyclopropyl | | H | Br | Br |
| A-32 | CH₂CH₂CH₃ | 2,2-dibromocyclopropyl | | H | Br | Br |
| A-33 | CH₂CH₂CH₃ | CH₃ | CH₃ | CH₃ | Br | Br |

Preferred insecticides and/or repellents of the pesticidal composition of the invention may be either one or a mixture. Preferred mixtures of pesticides are mixtures of insecticides and/or repellents with similar diffusion/migration properties. This group of insecticides and/or repellents may include synthetic pyrethroids such as alphacypermethrin, cyfluthrin, deltamethrin, etofenprox and permethrin, other pyrethroids such as bifenthrine, and non-pyrethroids such as carbosulphane.

The pesticide can also be included in the pesticidal composition as one of a water-based pesticide concentrate or a solvent, preferably an organic solvent, based pesticide concentrate or a concentrate based on a mixture of water and a solvent, preferably an organic solvent. Water-based concentrates may be in the form of suspensions or dispersions comprising suitable dispersing agents if necessary or in the form of emulsions comprising emulsifiers, solvents and co-solvents if appropriate. Nanoparticular pesticidal formulations may be obtained by dissolving solid solutions of pesticidal in a polar organic solvent, e.g. poly vinyl pyrrolidone (PVP). The concentration of the pesticide in the water based or solvent based concentrates is in general between 0.5 to 60 %, preferably 1 to 40 %, more preferably 3 to 20 %.

The particle size of the pesticide in water-based suspensions or dispersions is in general between 50 nm to 20 µm, preferably 50 nm to 8 µm, more preferably 50 nm to 4 µm, most preferably 50 nm to 500 nm, or 1 µm to 3 µm.

### Polymeric binder (component B)

The polymeric binder (component B) may be any polymeric binder known in the art. Especially preferred are polymeric binders used in the area of impregnating or coating textile materials or plastics materials.

Preferred binders are for example binders obtainable by polymerization, preferably radical polymerization, of at least one ethylenically unsaturated monomer selected from the group consisting of acrylates, preferably C₁-C₁₂-esters of acrylic acid or acrylates having crosslinked ester functionalities, methacrylates, preferably C₁-C₁₂-esters of methacrylic acid or methacrylates having crosslinked ester functionalities, acrylic acid, methacrylic acid, acrylonitrile, maleic acid, maleic acid anhydride, mono or diesters of maleic acid, styrene, derivatives of styrene such as methyl styrene, butadiene, vinyl acetate, vinyl alcohol, ethylene, propylene, allylic alcohol, vinyl pyrrolidone, vinyl chloride and vinyl dichloride.

The polymerization, preferably radical polymerization, may be carried out for example as bulk polymerization, gas phase polymerization, solvent polymerization, emulsion polymerization or suspension polymerization.

The conditions and further necessary and suitable components for the preparation of suitable polymers by polymerization, preferably radical polymerization, of the monomers mentioned above are known by a person skilled in the art.

Suitable polymeric binders obtained by polymerization, preferably radical polymerization, of the above-mentioned monomers are homopolymers or copolymers, preferably selected from the group consisting of polyacrylates, polymethacrylates, polyacrylonitrile, polymaleic acid anhydride, polystyrene, poly(methyl)styrene, polybutadiene, polyvinylacetate, polyvinylalcohol as well as copolymers obtained by polymerization of at least two different ethylenically unsaturated monomers of the group of monomers mentioned above and blends of said homopolymers and/or copolymers, for example poly(styrene-acrylates), poly(styrene-butadiene), ethylene-acrylate-copolymers, ethylene-vinylacetate-copolymers, which may be partially or completely hydrolyzed.

Further suitable polymeric binders are selected from polyurethanes and/or polyisocyanurates, blends comprising polyurethanes and/or polyisocyanurates, preferable blends comprising polyurethanes and/or polyisocyanurates and polycarbonates;
mineral waxes, zirconium waxes, silicones, polysiloxanes, fluorinated polyacrylates and methacrylates, fluorosilicones, and
fluorocarbon resins (as disclosed e.g. in WO 01/37662 and WO 92/16103);
melamine formaldehyde condensation resins, methylol urea derivatives; and curable polyesters;
or
blends or preparations comprising at least one of said polymeric binders.

The polymeric binders mentioned above are known in the art and are either commercially available or can be prepared by preparation processes known in the art.

Further suitable polymeric binders are polyvinylacetates in a formulation comprising a thickener like carboxymethyl cellulose and optionally a cross linking agent like a melamine resin; curable polyesters; formulations comprising reactive silicones (organic polysiloxanes), polyvinyl alcohol, polyvinyl acetate or an acrylic copolymer.

The crosslinking may be carried out thermally or by UV-light or by the dual cure technique. Optionally, a catalyst or a crosslinking agent may be used together with the polymeric binder.

Preferred polymeric binders are selected from the group consisting of acrylic binders and polyurethane and/or polyisocyanurate binders.

Most preferred polymeric binders are acrylic binders, which are optionally fluorinated. Especially preferred acrylic binders are mentioned below (component B1).

### Acrylic binders (Component B1)

Most preferred are acrylic binders, which may be hompolymers or copolymers, wherein the copolymers are preferred.

The acrylic binders are preferably obtained by radical polymerization, more preferably radical emulsion polymerization, of at least one monomer of formula II as component B1A 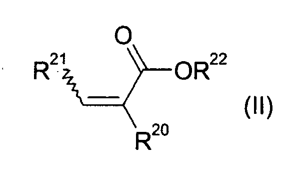 wherein
R²⁰, R²¹ and R²² are independently selected from C₁- to C₁₀-alkyl, which is optionally fluoro substituted and which may be linear or branched, for example methyl, ethyl, n-propyl, i-propyl, n-butyl, i-butyl, sec-butyl, t-butyl, n-pentyl, i-pentyl, sec-pentyl, neo-pentyl, 1,2-dimethylpropyl, i-amyl, n-hexyl, i-hexyl, sec-hexyl, n-heptyl, n-octyl, 2-ethylhexyl, n-nonyl, n-decyl, preferably C₁-to C₄-alkyl, for example methyl, ethyl, n-propyl, i-propyl, n-butyl, i-butyl, sec-butyl, tert-butyl; substituted or unsubstituted aryl, preferably substituted or unsubstituted C₆-to C₁₀-aryl, more preferably substituted or unsubstituted C₆-aryl, for example phenyl or tolyl;

R²⁰ and R²¹ may further be H.

Preferably R²⁰ is H or methyl. R²¹ is preferably H; R²² is preferably methyl, ethyl, n-butyl or 2-ethylhexyl.

More preferably R²⁰ is H or methyl, R²¹ is H and R²² is methyl, ethyl, n-butyl or 2-ethylhexyl.

Most preferably the monomer of formula II (component BA) is selected from the group consisting of 2-ethylhexylacrylate, n-butylacrylate, methylacrylate, methylmethacrylate and ethylacrylate. Most preferably.a copolymer obtainable by polymerization of at least two different acrylic monomers of formula II is employed.

Most preferably an acrylic binder is used as component B obtainable by emulsion polymerization of
b1a) at least one monomer of formula II as component B1A 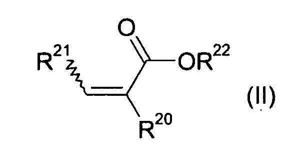 wherein
   R²⁰, R²¹ and R²² are independently selected from C₁- to C₁₀-alkyl which may be linear or branched, for example methyl, ethyl, n-propyl, i-propyl, n-butyl, i-butyl, sec-butyl, tert-butyl, n-pentyl, i-pentyl, sec-pentyl, neo-pentyl, 1,2-dimethylpropyl, i-amyl, n-hexyl, i-hexyl, sec-hexyl, n-heptyl, n-octyl, 2-ethylhexyl, n-nonyl, n-decyl, preferably C₁-to C₄-alkyl, for example methyl, ethyl, n-propyl, i-propyl, n-butyl, i-butyl, sec-butyl, tert-butyl; substituted or unsubstituted aryl, preferably substituted or unsubstituted C₆-to C₁₀-aryl, more preferably substituted or unsubstituted C₆-aryl, for example phenyl or tolyl;
   R²⁰ and R²¹ may further be H.
   Preferably R²⁰ is H or methyl. R²¹ is preferably H; R²² is preferably methyl, ethyl, n-butyl or 2-ethylhexyl.
   More preferably R²⁰ is H or methyl, R²¹ is H and R²² is methyl, ethyl, n-butyl or 2-ethylhexyl;
b1b) at least one monomer of formula III as component B1B 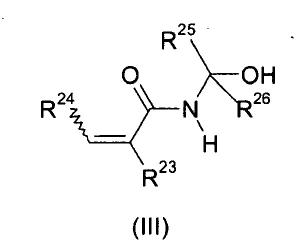 wherein
   R²³, R²⁴, R²⁵ and R²⁶ are independently selected from the group consisting of H, C₁- to C₁₀-alkyl which may be linear or branched, for example, methyl, ethyl, n-propyl, i-propyl, n-butyl, i-butyl, sec-butyl, tert-butyl, n-pentyl, i-pentyl, sec-pentyl, neo-pentyl, 1,2-dimethylpropyl, i-amyl, n-hexyl, i-hexyl, sec-hexyl, n-heptyl, n-octyl, 2-ethylhexyl, n-nonyl and n-decyl; preferably R²³, R²⁴, R²⁵ and R²⁶ are selected from the group consisting of H, C₁-to C₄-alkyl, which may be linear or branched, for example methyl, ethyl, n-propyl, iso-propyl, n-butyl, i-butyl, sec-butyl and tert-butyl; substituted or unsubstituted aryl, preferably substituted or unsubstituted C₆-to C₁₀-aryl, more preferably substituted or unsubstituted C₆-aryl, for example phenyl or tolyl;
   more preferably R²³ is H or methyl, R²⁴, R²⁵ and R²⁶ are preferably H;
   most preferably R²³ is H or methyl and R²⁴, R²⁵ and R²⁶ are H;
b1c) optionally at least one monomer of formula IV as component B1C 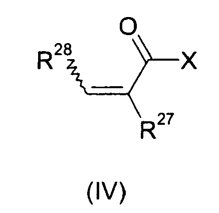 wherein
   R²⁷ and R²⁸ are independently selected from the group consisting of H, C₁-to C₁₀-alkyl which may be linear or branched, for example, methyl, ethyl, n-propyl, i-propyl, n-butyl, i-butyl, sec-butyl, tert-butyl, n-pentyl, i-pentyl, sec-pentyl, neo-pentyl, 1,2-dimethylpropyl, i-amyl, n-hexyl, i-hexyl, sec-hexyl, n-heptyl, n-octyl, 2-ethylhexyl, n-nonyl and n-decyl; preferably R²⁷ and R²⁸ are selected from the group consisting of H, C₁-to C₄-alkyl, which may be linear or branched, for example methyl, ethyl, n-propyl, iso-propyl, n-butyl, i-butyl, sec-butyl and tert-butyl; substituted or unsubstituted aryl, preferably substituted or unsubstituted C₆- to C₁₀-aryl, more preferably substituted or unsubstituted C₆-aryl, for example phenyl or tolyl;
   most preferably R²⁷ and R²⁸ are H;
   X is selected from the group consisting of H, OH, NH₂, OR²⁹OH, glycidyl, hydroxypropyl, 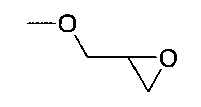 groups of the formula 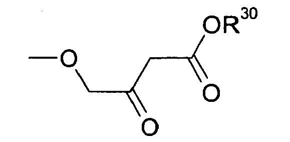 wherein
   R³⁰ is selected from the group consisting of C₁-to C₁₀-alkyl which may be branched or linear, for example methyl, ethyl, n-propyl, i-propyl, n-butyl, i-butyl, sec-butyl, tert-butyl, n-pentyl, i-pentyl, sec-pentyl, neo-pentyl, 1,2-dimethylpropyl, i-amyl, n-hexyl, i-hexyl, sec-hexyl, n-heptyl, n-octyl, 2-ethylhexyl, n-nonyl, n-decyl; preferably C₁-to C₄-alkyl, which may be branched or linear, for example methyl, ethyl, n-propyl, iso-propyl, n-butyl, iso-butyl, sec-butyl and tert-butyl; substituted or unsubstituted aryl, preferably substituted or unsubstituted C₆-to C₁₀-aryl, more preferably substituted or unsubstituted C₆-aryl, for example phenyl or tolyl;
   R²⁹ is selected from the group consisting of C₁-to C₁₀-alkylene, for example methylene, ethylene, propylene, butylene, pentylene, hexylene, heptylene, octylene, non-ylene, decylene; preferably C₁-to C₄-alkylene, for example methylene, ethylene, propylene, butylenes; substituted or unsubstituted arylenes, preferably substituted or unsubstituted C₆-to C₁₀-arylene, more preferably substituted or unsubstituted C₆-arylene, for example phenylene; most preferably X ist acetoacetyl;
b1d) further monomers which are copolymerizable with the monomers mentioned above selected from
   b1d1) polar monomers, preferably (meth)acrylic nitrile and/or methyl(meth)acrylate as component B1D1;
      and/or
   b1d2) non polar monomers, preferably styrene and/or a-methylstyrene as component B1D2.

The acrylic binder is preferably obtainable by emulsion polymerization of
b1a) 10 to 95 % by weight, preferably 30 to 95 % by weight, more preferably 50 to 90 % by weight of component B1A;
b1b) 1 to 5 % by weight of component B1B;
b1c) 0 to 5 % by weight, preferably 1 to 4 % by weight, more preferably 0.2 to 3% by weight of component B1C;
b1d) further monomers which are copolymerizable with the monomers mentioned above selected from
   b1d1) 0 to 30 % by weight, preferably 0 to 25 % by weight, more preferably 5 to 20 % by weight of component B1D1; and/or
   b1d2) 0 to 40 % by weight, preferably 0 to 30 % by weight, more preferably 5 to 20 % by weight of component B1D2;
wherein the sum of the components B1A, B1B and optionally B1C and B1D is 100 % by weight.

In a further preferred embodiment the acrylic binder is obtainable by emulsion polymerization of
b1a) 10 to 95 % by weight, preferably 30 to 95 % by weight, more preferably 50 to 90 by weight of at least one acrylic binder (component B1A) as defined above, comprising;
   b1a1) 10 to 90% by weight, preferably 15 to 85% by weight, more preferably 30 to 85% by weight based on the acrylic binder of n-butyl acrylate;
   b1a2) 10 to 90% by weight, preferably 12 to 85% by weight, more preferably 15 to 65% by weight based on the acrylic binder of at least one monomer of formula II, different from n-butyl acrylate;
b1b) 1 to 5 % by weight based on the acrylic binder of at least one monomer of formula III (component B1B);
b1c) 0 to 5 % by weight, preferably 0.1 to 4 % by weight, more preferably 0.2 to 3% by weight based on the acrylic binder of at least one monomer of formula III (component B1C);
b1d) further monomers which are copolymerizable with the monomers mentioned (component B1D) above selected from
   b1d1) 0 to 30 % by weight, preferably 0 to 25 % by weight, more preferably 5 to 20 % by weight based on the acrylic binder of at least one polar monomer, preferably (meth)acrylic nitrile and/or methyl(meth)acrylate (component B1D1); and/or
   b1d2) 0 to 40 % by weight, preferably 0 to 30 % by weight, more preferably 5 to 20 % by weight based on the acrylic binder of at least one non polar monomer, preferably styrene and/or α-methylstyrene (component B1D2);
wherein the sum of the components B1A, B1B and optionally B1C and B1D is 100 % by weight.

The acrylic binder may comprise further additives as known by a person skilled in the art, for example film forming agents and plasticizers, e.g. adipate, phthalate, butyl diglycol, mixtures of diesters preparable by reaction of dicarboxylic acids and alcohols which may be linear or branched. Suitable dicarboxylic acids and alcohols are known by a person skilled in the art.

The insecticide compositions comprising the binder as claimed in the present invention are wash resistant while permitting continuous release of the insecticide at a controlled rate, in order to provide the required bioavailability of the insecticide. It is not necessary to add for example a dispersing agent that, after application of the composition to a fabric and upon wetting of the fabric, reduces the hydrophobicity imparted to the insecticide by the binder to permit limited insecticide release. Preferably, the insecticide composition of the present invention does therefore not comprise a dispersing agent in addition to the polymeric binder.

Most preferably the acrylic binder is obtainable by emulsion polymerization of the following components:
b1a) 50 to 90 % by weight of at least one monomer of formula II as component B1A 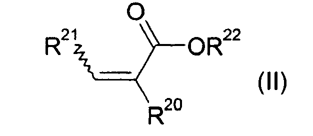 wherein
   R²⁰ is H or methyl, R²¹ is H and R²² is methyl, ethyl, n-butyl, or 2-ethylhexyl, as component B1A, most preferably component B1A is 2-ethylhexylacrylate, n-butylacrylate, methylacrylate, methylmethacrylate or ethylacrylate;
b1b) 1 to 5 % by weight of at least one monomer of formula III 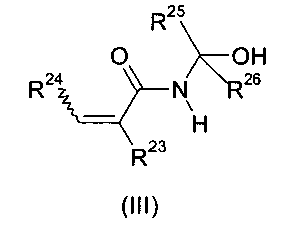 wherein R²³ is H or methyl, R²⁴, R²⁵ and R²⁶ each are H as component B1B;
b1c) 1 to 10 % by weight, preferably 1 to 7 % by weight, more preferably 2 to 5 % by weight of at least one monomer of formula IV 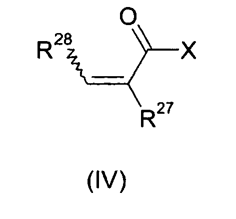 wherein R²⁷ and R²⁸ are H and X is H, OH, NH₂, OR²⁹OH, glycidyl or a group of the formula 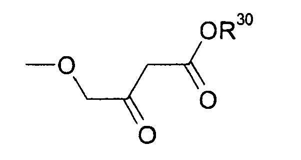 wherein
   R³⁰ is selected from the group consisting of C₁-to C₁₀-alkyl which may be branched or linear, for example methyl, ethyl, n-propyl, i-propyl, n-butyl, i-butyl, sec-butyl, tert-butyl, n-pentyl, i-pentyl, sec-pentyl, neo-pentyl, 1,2-dimethylpropyl, i-amyl, n-hexyl, i-hexyl, sec-hexyl, n-heptyl, n-octyl, 2-ethylhexyl, n-nonyl, n-decyl; preferably C₁-to C₄-alkyl, which may be branched or linear, for example methyl, ethyl, n-propyl, iso-propyl, n-butyl, iso-butyl, sec-butyl and tert-butyl; substituted or unsubstituted aryl, preferably substituted or unsubstituted C₆-to C₁₀-aryl, more preferably substituted or unsubstituted C₆-aryl, for example phenyl or tolyl;
   R²⁹ is selected from the group consisting of C₁-to C₁₀-alkylene, for example methylene, ethylene, propylene, butylene, pentylene, hexylene, heptylene, octylene, non-ylene, decylene; preferably C₁- to C₄-alkylene, for example methylene, ethylene, propylene, butylenes; substituted or unsubstituted arylenes, preferably substituted or unsubstituted C₆- to C₁₀-arylene, more preferably substituted or unsubstituted C₆-arylene, for example phenylene;
   as component B1C, most preferably X is acetoacetyl;
b1d) further monomers which are copolymerizable with the monomers mentioned above selected from
   - b1d1): 0 to 30 % by weight, preferably 0 to 25 % by weight, more preferably 5 to 20 % by weight of component B1D1, preferably (meth)acrylic nitrile and/or methyl(meth)acrylate;
   and/or
   - b1d2): 0 to 40 % by weight, preferably 0 to 30 % by weight, more preferably 5 to 20 % by weight of component BD2, preferably styrene and/or a-methylstyrene;
   wherein the sum of components BA, BB and optionally BC and BD is 100 % by weight.

In a further most preferred embodiment the amount of n-butylacrylate as component BA is from 30 to 90 % by weight, and the other components B1B and optionally a further monomer of formula II (component B1A), B1C and B1D are chosen as mentioned before, wherein the sum of components B1A, B1B and optionally B1C and B1D is 100 % by weight.

The acrylic binder of the present invention is preferably obtainable by emulsion polymerization of the monomers mentioned before. Suitable process conditions are known by a person skilled in the art, and are disclosed e.g., in WO-A 2005/064072.

In the acrylic binder according to the invention, it is possible to add in general up to 10 % by weight, preferably 0.05 to 5 % by weight of mono- or di-olefinically unsaturated monomers containing reactive or cross-linking groups. Examples of such monomers are in particular the amides of α,β-olefinically unsaturated C₃₋₅-carboxylic acids, particularly acryl amides, methacryl amides and maleic diamides, and their N-methylol derivatives such as N-methylol acrylic amide, N-methylol methacrylic amide, N-alkoxy methyl amides of α,β-monoolefinically unsaturated C₃₋₅-carboxylic acids such as N-methoxy methacrylic amide and N-n-butoxymethylacrylic amide, vinyl sulfonic acid, monoesters of acrylic and methacrylic acids with alkanediols such as glycol, butanediol-1,4, hexane diol-1,6, and 3-chloropropanediol-1,2, and also allyl and methallyl esters of α,β-olefinically unsaturated mono- and di-carboxylic acids such as diallyl maleate, dimethyl allyl fumarate, allyl acrylate and allyl methacrylate, diallyl phthalate, diallyl terephthalate, p-di-vinyl benzene, methylene-bis-acrylamide and ethylene glycol di-allylether.

The molecular weight of the non crosslinked emulsion polymers obtained is in general 40,000 to 250,000 (determined by GPC). The molecular weight is usually controlled by the use of conventional chain stoppers in conventional amounts. Conventional chain stoppers are for example sulfoorganic compounds.

The acrylic binder of the present invention is obtained in form of its aqueous dispersion and is preferably employed in the insecticide compositions of the present invention in form of the aqueous dispersion.

### Polyurethane binders and/or Polyisocyanurate binders (Component 82)

In a further preferred embodiment the polymeric binders are polyurethanes and/or polyisocyanurates. Said polyurethanes and/or polyisocyanurates may be employed either alone as polymeric binders or in combination with further polymeric binders, especially polymeric binders mentioned before, for example in combination with the acrylic binders mentioned before.

Suitable polymeric binders are therefore:
at least one polyurethane as component B2, obtainable by reaction of the following components:
b2a) at least one diisocyanate or polyisocyanate as component B2A, preferably aliphatic, cycloaliphatic, araliphatic and/or aromatic insocyanates, more preferably diisocyanates, which are optionally biuretisized and/or isocyanurized, most preferably 1-isocyanato-3,3,5-trimethyl-5-isocyanatomethylene cyclohexane (IPDI) and hexamethylene diisocyanate-1,6 (HMDI);
b2b) at least one diol, triol or polyol as component B2B, preferably aliphatic, cycloaliphatic and/or araliphatic diols having 2 to 14, preferably 4 to 10 carbon atoms, more preferably 1,6-hexanediol or neopentyl glycol;
b2c) optionally further components as component B2C, preferably adipic acid or carbonyl diimidazole (CDI); and
b2d) optionally further additives as component B2D.

The polyurethane is preferably obtainable by reaction of the following components:
b2a) 55 to 99 % by weight, preferably 70 to 98 % by weight, more preferably 75 to 90 by weight based on the polyurethane of at least one diisocyanate or polyisocyanate (component B2a), preferably aliphatic, cycloaliphatic, araliphatic and/or aromatic insocyanates, more preferably diisocyanates, which are optionally biuretisized and/or isocyanurized, more preferably alkylene diisocyanates having from 4 to 12 carbon atoms in the alkylene unit, like 1,12-dodecane diisocyanate, 2-ethyltetramethylene diisocyanate-1,4, 2-methylpentamethylene diisocyanate-1,5, tetramethylene diisocyanate-1,4, lysinester diisocyanate (LDI), hexamethylene diisocyanate-1,6 (HMDI), cyclohexane-1,3-and/or-1,4-diisocyanate, 2,4-and 2,6-hexahydro-toluylene diisocyanate as well as the corresponding isomeric mixtures 4,4'-2,2'- and 2,4'-dicyclohexylmethane diisocyanate as well as the corresponding mixtures, 1-isocyanato-3,3,5-trimethyl-5-isocyanatomethyl cyclohexane (IPDI), 2,4- and/or 2,6-toluylene diisocyanate, 4,4'-, 2,4' and/or 2,2'-diphenylmethane diisocyanate (monomeric MDI), polyphenylpolymethylene polyisocyanate (polymeric MDI) and/or mixtures comprising at least 2 of the isocyanates mentioned before; further ester-, urea-, allophanate-, carbodiimid-, uretdione- and/or urethane groups comprising di- and/or polyisocyanates may be used; most preferably 1-isocyanato-3,3,5-trimethyl-5-isocyanatomethylene cyclohexane (IPDI) and hexamethylene diisocyanate-1,6 (HMDI);
b2b) 10 to 90% by weight, preferably 12 to 85% by weight, more preferably 15 to 65% by weight based on the polyurethane of at least one diol, triol or polyol (component B2B), preferably aliphatic, cycloaliphatic and/or araliphatic diols having 2 to 14, preferably 4 to 10 carbon atoms, more preferably polyols, selected from the group consisting of polyetherols, e.g. polytetrahydrofurane, polyesterols, polythioetherpolyols, hydroxyl group containing polyacetales and hydroxyl group containing aliphatic polycarbonates or mixtures of at least 2 of the polyols mentioned before. Preferred are polyesterols and/or polyetherols. The hydroxyl number of the polyhydroxy compounds is in general from 20 to 850 mg KOH/g and preferably 25 to 80 mg KOH/g. Further, diols and/or triols having a molecular weight of from in general 60 to <400, preferably from 60 to 300 g/mol are employed. Suitable diols are aliphatic, cycloaliphatic and/or araliphatic diols having from 2 to 14, preferably 4 to 10 carbon atoms, e.g. ethylene glycol, propane diol-1,3, decane diol-1,10, o-, m-, p-dihydroxycyclohexane, diethylene glycol, dipropylene glycol and preferably butane diol-1,4, neopentyl glycol, hexane diol-1,6 and bis-(2-hydroxy-ethyl)hydroquinone, triols, like 1,2,4-, 1,3,5-trihydroxy-cyclohexane, glycerine and trimethylol propane and mixtures of low molecular hydroxyl groups containing polyalkylene oxides based on ethylene oxide and/or 1,2-propylene oxide and the diols and/or triols mentioned before;
b2c) 0 to 10 % by weight, preferably 0.1 to 5 % by weight, more preferably 1 to 5 % by weight based on the polyurethane of further components (component B2C), preferably adipic acid or carbonyl diimidazole (CDI); and
b2d) 0 to 10 % by weight, preferably 0.1 to 5 % by weight, more preferably 0.5 to 5 % by weight based on the polyurethane of further additives (component B2D);
wherein the sum of the components B2A, B2B, B2C and B2D is 100 % by weight.

The polyurethanes are prepared by methods known in the art. Further, additives as known by a person skilled in the art may be used in the process for preparing the polyurethanes.

Component B may also be a polyisocyanurate or a mixture of a polyisocyanurate and a polyurethane, preferably a polyurethane as mentioned above.

Polyisocyanurates are polymers comprising groups of the following formula: 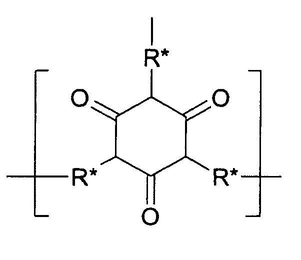 wherein R* is an alkylene or arylene residue depending on the isocyanate employed in the preparation of the isocyanurate.

Polyisocyanurates are usually prepared by cyclotrimerization of isocyanates. Preferred isocyanates are the same isocyanates as mentioned before (component B2A). Preparation processes and conditions for the preparation of polyisocyanurates are known by a person skilled in the art.

### Pesticidal compositions

The pesticidal compositions of the invention may be aqueous compositions or dry compositions, i.e. compositions which do not comprise water.

In a preferred embodiment the pesticidal compositions are aqueous compositions, preferably comprising 55 to 97 % by weight, more preferably 85 to 95 % by weight of water, and 3 to 45 % by weight, preferably 5 to 15 % by weight of solids, based on the total of the components in the insecticide compositions of the present invention, wherein the total is 100 % by weight. The solids are preferably selected from the group consisting of at least one pesticide as component A as defined above, and at least one polymeric binder as component B as defined above, and optionally at least one fixative agent as component C as defined below, and optionally further components depending on the use of the final product as defined above.

The treatment baths from which the pesticidal compositions are applied to the material are preferably aqueous formulations comprising 95 to 99.5 % by weight, preferably 95 to 99 % by weight, more preferably 97 to 99 % by weight of water, and 0.5 to 5 % by weight, preferably 1 to 5 % by weight of solids, based on the total of the components in the insecticidal compositions of the present invention. The solids are preferably selected from the group consisting of at least one pesticidal of formula I as component A as defined above, and at least one polymeric binder as component B as defined above, and optionally at least one fixative agent as component C as defined below, and optionally further components depending on the use of the final product as defined above.

The polymeric binder may advantageously be applied with a fixative agent C for improved attachment of the pesticide on the material. The fixative agent may comprise free isocyanate groups.

Suitable fixable agents are for example isocyanates or isocyanurates comprising free isocyanate groups. Preferably the isocyanurates are based on alkylene diisocyanates having from 4 to 12 carbon atoms in the alkylene unit, like 1,12-dodecane diisocyanate, 2-ethyltetramethylene diisocyanate-1,4, 2-methylpentamethylene diisocyanate-1,5, tetramethylene diisocyanate-1,4, lysinester diisocyanate (LDI), hexamethylene diisocyanate-1,6 (HMDI), cyclohexane-1,3-and/or-1,4-diisocyanate, 2,4-and 2,6-hexahydrotoluylene diisocyanate as well as the corresponding isomeric mixtures 4,4'-2,2'- and 2,4'-dicyclohexylmethane diisocyanate as well as the corresponding mixtures, 1-isocyanato-3,3,5-trimethyl-5-isocyanatomethyl cyclohexane (IPDI), 2,4- and/or 2,6-toluylene diisocyanate, 4,4'-, 2,4' and/or 2,2'-diphenylmethane diisocyanate (monomeric MDI), polyphenylpolymethylene polyisocyanate (polymeric MDI) and/or mixtures comprising at least 2 of the isocyanates mentioned before. More preferably the isocyanurates are based on hexamethylene diisocyanate-1,6 (HMDI).

More preferably the isocyanurate is a isocyanurate which is hydrophilized with a polyalkylene oxide based on ethylene oxide and/or 1,2-propylene oxide, preferably polyethylene oxide.

The isocyanurate used as a fixative agent can be prepared by methods known in the art. Preferably 5 to 25% by weight, more preferably 7 to 20% by weight, most preferably 10 to 15% by weight of the isocyanate groups based on the amount of isocyanate used as staring material for the preparation of the isocyanurate are free isocyanate groups.

Most preferably the isocyanurate used as a fixative agent is dissolved in a polar aprotic solvent, e.g. THF, DMF or propylene or ethylene carbonate.

The most preferred fixative agent used is an isocyanurate based on HMDI which are hydrophilized with a polyethylene oxide and which is dissolved in propylene carbonate (70% by weight of HMDI in 30% by weight of propylene carbonate). The amount of free isocyanate groups is 11 to 12 % by weight, based on the amount of isocyanate used as staring material for the preparation of the isocyanurate.

The pesticidal composition preferably comprises the following components, based on the solids content of the composition, if a fixative agent is used:
a) 20 to 70 % by weight, preferably 25 to 65 % by weight, more preferably 30 to 65 % by weight of at least one pesticide (component A), and
b) 29 to 72 % by weight, preferably 34 to 70 % by weight, more preferably 33 to 66 by weight of at least one polymeric binder (component B) as defined above;
c) 1 to 8 % by weight, preferably 1 to 5% by weight, more preferably 2 to 4 % by weight of at least one fixative agent (component C);
wherein the sum of the components is 100 % by weight of solids content of the pesticide composition.

Depending on the use of the final product the pesticidal composition may further comprise one or more components selected from water, preservatives, detergents, fillers, impact modifiers, anti-fogging agents, blowing agents, clarifiers, nucleating agents, coupling agents, conductivity-enhancing agents (antistats), stabilizers such as anti-oxidants, carbon and oxygen radical scavengers and peroxide decomposing agents and the like, flame retardants, mould release agents, agents having UV protecting properties, optical brighteners, spreading agents, anti-blocking agents, anti-migrating agents, foam-forming agents, anti-soiling agents, thickeners, further biocides, wetting agents, plasticizers and film forming agents, adhesive or anti-adhesive agents, optical brightening (fluorescent whitening) agents, fragrance, pigments and dyestuffs.

Suitable anti-foam agents are for example silicon anti-foam agents. Suitable UV-protecting agents for protecting UV-sensitive insecticides and/or repellents are for example para-aminobenzoic acids (PABA), octylmethoxysinameth, stilbenes, styryl or benzotriazole derivatives, benzoxazol derivatives, hydroxy-substituted benzophenones, salicylates, substituted triazines, cinnamic acid derivatives (optionally substituted by 2-cyano groups), pyrazoline derivatives, 1,1'-biphenyl-4,4'-bis-2-(methoxyphenyl)-ethenyl or other UV protecting agents. Suitable optical brighteners are dihydroquinolinone derivatives, 1,3-diaryl pyrazoline derivatives, pyrenes, naphthalic acid imides, 4,4'- diystyryl biphenylene, 4,4'-diamino-2,2'-stilbene disulphonic acids, cumarin derivatives and benzoxazole, benzisoxazole or benzimidazole systems which are linked by -CH=CH-bridges or other fluorescent whitening agents.

Typical pigments used in the pestidical compositions of the present invention are pigments which are used in pigment dyeing or printing processes or are applied for the coloration of plastics and are known by a person skilled in the art.

Pigments may be inorganic or organic by their chemical nature. Inorganic pigments are mainly used as white pigments (e.g., titanium dioxide in the form of rutile or anatas, ZnO, chalk) or black pigments (e.g., carbon black). Colored inorganic pigments may be used as well but are not preferred because of potential toxicologic hazards. For imparting color, organic pigments or dyestuffs are preferred. Organic pigments may be mono or disazo, naphthol, benzimidazolone, (thio) indigoid, dioxazine, quinacridone, phthalocyanine, isoindolinone, perylene, perinone, metal complex or diketo pyrrolo pyrrole type pigments. Pigments may be used in powder or liquid form (i.e., as a dispersion). Preferred pigments are Pigment Yellow 83, Pigment Yellow 138, Pigment Orange 34, Pigment Red 170, Pigment Red 146, Pigment Violet 19, Pigment Violet 23, Pigment Blue 15/1, Pigment Blue 15/3, Pigment Green 7, Pigment Black 7. Other suitable pigments are known to a person skilled in the art.

Typical dyestuffs which may be used in the present invention are vat dyes, cationic dyes and disperse dyes in powder or liquid form. Vat dyes may be used as pigments or following the vatting (reduction) and oxidation procedure. Using the vat pigment form is preferred. Vat dyes may be of the indanthrone type, e.g. C.I. Vat Blue 4, 6 or 14; or of the flavanthrone type, e.g. C.I. Vat Yellow 1; or of the pyranthrone type, e.g. C.I. Vat Orange 2 and 9; or of the isobenzanthrone (isoviolanthrone) type, e.g. C.I. Vat Violet 1; or of the dibenzanthrone (violanthrone) type, e.g. C.I. Vat Blue 16, 19, 20 and 22, C.I. Vat Green 1, 2 and 9, C.I. Vat Black 9; or of the anthraquinone carbazole type, e.g. C.I. Vat Orange 11 and 15, C.I. Vat Brown 1, 3 and 44, C.I. Vat Green 8 and C.I. Vat Black 27; or of the benzanthrone acridone type, e.g. C.I. Vat Green 3 and 13 and C.I. Vat Black 25; or of the anthraquinone oxazole type, e.g. C.I. Vat Red 10; or of the perylene tetra carbonic acid diimide type, e.g. C.I. Vat Red 23 and 32; or imidazole derivatives, e.g. C.I. Vat Yellow 46; or amino triazine derivatives, e.g. C.I. Vat Blue 66. Other suitable vat dyes are known by a person skilled in the art.

Typical disperse and cationic dyestuffs are known by a person skilled in the art.

If cellulosic substrates are employed as material, said cellulosic substrates are preferably dyed with vat, direct, realative or sulphur dyestuffs.

In a further embodiment the pesticidal compositions of the present invention are pesticidal compositions as mentioned before comprising at least one pigment and/or at least one dyestuff. The pesticidal compositions of the present invention preferably comprise 10 to 300 % by weight, more preferably 20 to 150 % by weight of the pigment and/or dyestuff relating to the total weight of the solids content of the pesticide.

The material, for example textile material or plastics material, may be impregnated prior to use if the composition is delivered in the form of a kit.

In a further embodiment, the impregnated material according to the present invention further comprises one or more components selected from preservatives, detergents, stabilizers, agents having UV-protecting properties, optical brighteners, spreading agents, anti-migrating agents, foam-forming agents, wetting agents, anti-soiling agents, thickeners, further biocides, plasticizers, adhesive agents, pigments and dyestuffs. Suitable examples of the components mentioned above are known to a person skilled in the art.

In a further embodiment of the present invention the impregnated material comprises besides the at least one pesticide and the at least one polymeric binder as described before at least one pigment and/or at least one dyestuff. The amount of the at least one pigment is in general from 0.05 to 10 % by weight, preferably 0.1 to 5 % by weight, more preferably 0.2 to 3.5 % by weight of the (dry) weight of the non-living material. The amount of the at least one dyestuff is in general from 0.05 to 10 % by weight, preferably 0.1 to 5 % by weight, more preferably 0.2 to 3.5 % by weight of the (dry) weight of the material. The material comprises preferably either at least one pigment or at least one dyestuff. Suitable pigments and dyestuffs are mentioned before.

### Process for impregnation of a protective material

In a further embodiment, the present invention relates to a process for impregnation of a material, for example a textile material or plastics material, comprising
i) forming an aqueous formulation or a melt, wherein an aqueous formulation is preferred, comprising at least one pesticide and at least one polymeric binder, preferably a polymeric binder as defined above, and optionally further ingredients;
ii) applying the aqueous formulation to the material by
   iia) passing the material through the aqueous formulation;
      or
   iib) bringing the material in contact with a roller that is partly or fully dipped into the aqueous formulation and drawing the aqueous formulation to the side of the material in contact with the roller,
      or
   iic) double-side coating of the material
      or
   iid) spraying the aqueous formulation onto the material, wherein the spraying is carried out with any suitable device for spraying by hand or automatically, for example with an aerosol can or devices usually used in a factory;
      or
   iie) applying the aqueous formulation in form of a foam;
      or
   iif) submerging the material intro the aqueous formulation;
      or
   iig) brushing the aqueous formulation onto or into the material ;
      or
   iih) pouring the aqueous formulation onto the material ;
      or
   applying the melt by calendaring or with a doctor-blade;
iii) optionally removing surplus aqueous formulation or surplus; and
iv) drying and/or curing the material.

In the context of the invention, an aqueous formulation may be a solution, an emulsion or a suspension/dispersion.

The aqueous formulation or the melt preferably comprises the pesticidal composition, which is preferably employed in form of an aqueous formulation.

In the context of the invention "impregnation" is a process for applying the pesticidal composition. This process may include a process for curing the applied pestidical composition to achieve a coating onto the material, if desired. An "impregnated material" is a material onto which the pesticidal composition is applied. The "impregnated material" may be coated by curing the applied pesticidal composition, if desired.

The pesticidal composition may also be applied onto the material by transfer printing, inkjet printing, a screen process, and powder printing.

Details of the application of the pesticidal composition are well known to someone skilled in the art and are disclosed, e.g., in WO 2005/064072.

The method according to the invention is useful for protecting tobacco, tobacco bales or other tobacco products. It can be used for protecting any kind of tobacco, such as e.g. tobacco produced from Nicotiana rostica and Nicotiana tabacum, specifically dark tobacco, bright tobacco, burley tobacco, shade tobacco and Perique.

The method is useful for protecting, the tobacco from any kind of pests and disease encountered in the transport and storage of tobacco, specifically from storage pests, like bugs, beetles and moths, mites, mice and tobacco diseases.

### Such pests include:

Cigarette beetle (Lasioderma serricorne), tobacco moth (Ephespha elutella), confused flour beetle (Tribolium confusum), red flour beetle (Tribolium castaneum), saw-toothed grain beetle (Oryzaephilus surinamensis), yellow meal worm (Tenebrio molitor), lesser meal worm (Alphitobius diaperinus), granary weevil (Sitophilus granarius), lesser grain borer (Rhyzopertha dominica), maize weevil (Sitophilus zeamais), rice weevil (Sitophilus oryzae), angoumois grain moth (Sitotroga cerealella), Indian meal moth (Plodia interpunctella), drugstore beetle (Stegobium paniceum), cadelle beetle (Tenebroides mauritanicus), long-headed flour beetle (Latheticus orizae), dark mealworm (Tenebrio obscurus), dermestid beetles such as: black carpet beetle, larder beetle, wardrobe beetle, odd beetle, hide beetle, warehouse beetle, spider beetles, weevils, especially the bean weevil, grain mite, black flour beetle, flat grain beetles, fruit flies, vinegar flies, rusty grain beetle, hairy fungus beetle, flat grain beetle, sap beetles, deathwatch beetles, darkling beetles, and fungus beetles.

The method according to the invention is specifically useful for the control of the cigarette beetle (Lasioderma serricorne), and the tobacco moth (Ephespha elutella), the two main pests in tobacco storage.

The methods according to the invention can be applied in all stages and types of tobacco processing, where a storage period is required.

Such processing includes the curing of tobacco after harvesting, specifically the yellowing, leaf drying and stem drying stage.

It includes any type of curing, such as air-curing, sun-curing, fire-curing and, in particular, flue-curing. In the flue-curing, the method can be used in direct-fired systems as indirect fired systems, working, e.g., with heat exchangers.

The method according to the invention is further useful in the fermenting and aging steps of tobacco processing. Depending on the kind and quality of the final tobacco product, these steps range from a couple of days to several years - during which the tobacco has to be protected from pests.

Accordingly, the method according to the invention is useful in the production of any kind of tobacco product for human consumption, such as cigarettes, cigars, pipe tobacco, cigarette tobacco, snuff, chewing tobacco, snuff, gutka and creamy snuff.

The device according to the invention comprises means for spreading out the tobacco leaves, such as a rack or an open framework where sticks of tied leaves or the whole stalk is hung, a material, which has protective activity against harmful organism, and which covers the tobacco to be protected, and, optionally means for attaching the material to the means for spreading out the tobacco.

The material is a net, because this does not disturb the drying or curing process - which requires an exchange of air, humidity and heat between the tobacco and its environment - while it still affords good protection against pests.

Surprisingly, the use of nets leads to a good protection even in the case of fungal diseases.

The invention is further illustrated by the following examples without limiting it thereby.

### Examples

### I. Binder:

### A) Preparation of polymer dispersions

### General procedure:

250 g of water and 3 g of a styrene seed (33 % by weight) having a medium particle diameter of 30 nm are heated to 85°C and 5 % by weight of feed 2 are added. After 10 min. addition of feed 1 comprising the monomers mentioned below and feed 2 is started.

Feed 2 comprises 3.0 g sodiumperoxidsulfate dissolved in 39.9 g of water.

The composition of feed 1 is listed in table 1.

Feed 1 and 2 are added in 3 h, and it was polymerized for further 0.5 h.

**Table 1: Composition of feed 1 in % by weight pphm (parts per hundred monomers)**

| Monomer compositions | MMA | S | AN | EHA | BA | EA | HPMA | GMA | MaMol | AMol | AM | AS | FI-1 | BMA-Acac |
|---|---|---|---|---|---|---|---|---|---|---|---|---|---|---|
| A 1 | 27.0 | | | 3.1 | 65.0 | | | | | | 2.0 | 1.0 | 1.9 | |
| A 2 | 23.9 | 5.0 | | 5.3 | 60.0 | | | | | | 1.2 | 0.6 | | 4.0 |
| A 3 | | 16.6 | | 30.0 | 30.0 | 20.0 | | | | 3.0 | | 0.4 | | |
| A 4 | 25.7 | 5.0 | | 5.3 | 60.0 | | | | 3.5 | | | 0.5 | | |
| A 5 | | 14.7 | 11.0 | | 70.0 | | | | 3.5 | | 0.5 | 0.3 | | |
| A 6 | 30.0 | 13.0 | 8.0 | | 45.2 | | | | | 3.0 | 0.5 | 0.3 | | |
| A 7 | 30.0 | 13.0 | 8.0 | | 44.5 | | | | | | 0.5 | 0.3 | | 3.7 |
| A 8 | 33.0 | | | | 60.0 | 3.9 | | | | | 1.0 | 0.5 | 1.6 | |
| A 9 | 20.0 | 20.0 | | 17.0 | 23.0 | 15.3 | | | 3.5 | | | 1.2 | | |
| A 10 | 20.0 | 20.0 | | 17.0 | 23.0 | 15.3 | | | | | 0.4 | 0.3 | | 4.0 |
| A 11 | 10.0 | 10.0 | | | 25.5 | 50.0 | 2.5 | | | | | 2.0 | | |
| A 12 | 10.0 | 10.0 | | | 25.5 | 47.7 | 2.5 | 3.5 | | | 0.7 | 0.1 | | |
| A 13 | | 10.0 | 11.0 | | 60.0 | 14.7 | | 4.0 | | | 0.2 | 0.1 | | |
| A 14 | | 20.0 | 8.0 | | 55.0 | 12.5 | 3.0 | | | | | 1.5 | | |
| A 15 | 26.0 | | 13.0 | | 57.0 | | | | 3.0 | | | 1.0 | | |
| A 16 | 15.0 | | 13.0 | | 68.0 | | | | 3.0 | | | 1.0 | | |
| A 17 | | | 16.0 | | 81.0 | | | | 2.0 | | | 1.0 | | |

The amount of initiator sodium peroxidisulfate is 0.3 parts by weight, the emulsifier comprises 0.4 parts by weight of Dowfax 2A1 (Dow) und 0.6 parts by weight of Lumiten IRA (BASF AG), relating to 100 parts by weight of the monomer composition of table 1.

### Abbreviations:

- MMA:: methyl methacrylate
- S:: styrene
- AN:: acrylic nitril
- EA:: ethyl acrylate
- EHA:: 2-ethylhexylacrylate
- BA:: n-butyl acrylate
- FI:: copolymerizable benzophenone having an acrylic group
- GMA:: glycidylmethacrylate
- BMA-Acac:: bitandiolmonoacrylate acetylacetate
- Amol:: N-methylol acrylamide
- MAMol:: N-methylol methacrylamide
- HPMA:: hydroxypropyl methacrylate
- AS:: acrylic acid
- AM:: acrylic amide

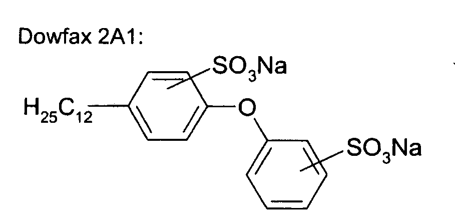

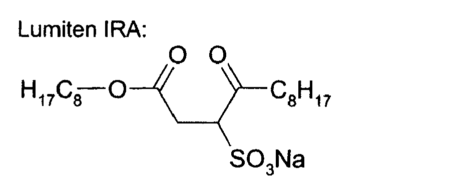

### Examples A1 and A8

Aqueous polymer dispersions comprising FI - 1 polymerizable photo initiator which is later useful as crosslinking agent is a photo initiator of formula 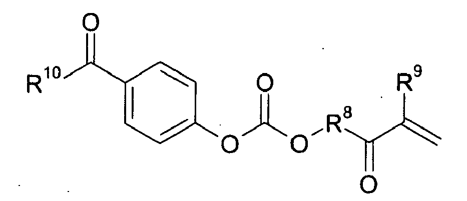 wherein
- R⁸: is an organic radical having from 1 to 30 carbon atoms,
- R⁹: is H or a methyl group, and
- R¹⁰: is a phenyl group which is optionally substituted or a C₁- to C₄-alkyl group.

### II. Examples of use

### a) Preparation of long-lasting insecticidal nets (LLINs)

The insecticidal treatment was performed with aqueous dispersions according to examples A1 - A17 on commercially available white polyester netting material (fiber titer 75 denier, 156 mesh (about 2 x 2 mm, diamond shape), weight 28-32 g/m²) without prior washing. The aqueous treatment baths were prepared by mixing the aqueous dispersions with commercially available emulsions of insecticide and/or repellent, setting pH with buffer solutions and adding a fixative (if needed). The concentrations of the treatment baths were adjusted according to the liquor uptake possible (LU between 60 and 100 %). The treatment baths were applied by using a padder-stenter equipment on a laboratory scale (Mathis AG, Switzerland). The netting material is fully immersed into the treatment bath and excess liquor is removed by passing it through cylinders which move in counter-direction. By choosing a defined distance between these cylinders (and thus a defined pressure) the liquor uptake can be controlled. The liquor uptake is measured by weighing an impregnated piece of netting and subtracting the weight of the dry, untreated netting and is given as % weight of liquor on weight of netting. The drying/curing step was performed in a laboratory stenter which allows to control the temperature and time of the treatment.

### b) Testing Methodologies

### Limited Forced Exposure Assay:

Alphacypermethrin-impregnated long-lasting insecticidal nets (LLINs, 200 mg ai/m²) were cut to fit 150 x 25 mm Petri dishes. LLINs were placed on the bottom of the dishes and 10 adult cigarette beetles, *Lasioderma serricorne,* were introduced into each dish onto the nets. Beetles were exposed to the nets for 10, 30, or 60 minutes and the nets were then removed. Mortality/knockdown was evaluated at the time of net removal. Ten replicates were performed per treatment.

### Behavioral Assay:

Cardboard shipping tubers (457 mm pieces of 76 mm diameter) were covered on one end with alphacypermethrin-impregnated long-lasting insecticidal net (LLIN, 200 mg ai/m²), which was secured with a rubber band and electrical tape. The end of the tube with the LLIN was attached to a clear plastic cup (76 mm diameter x 89 mm height) with electrical tape filled with 20.0 g of toasted oat cereal to serve as a food source. Ten adult tobacco moths, *Ephestia elutella,* (Table 3) or ten adult cigarette beetles, *Lasioderma serricorne,* (Table 2) were introduced into the tubes on the opposite end of the LLIN and food source. The opposite (open) end of each tube was then sealed. Location and mortality of the moths/beetles were evaluated at 1 and 2 days (*E*. *elutella*) or 1 and 4 days (*L. serricorne*) after treatment (DAT). Ten replications were performed per treatment with *E. elutella* and eight replications were performed per treatment with *L. serricorne.*

### c) Results

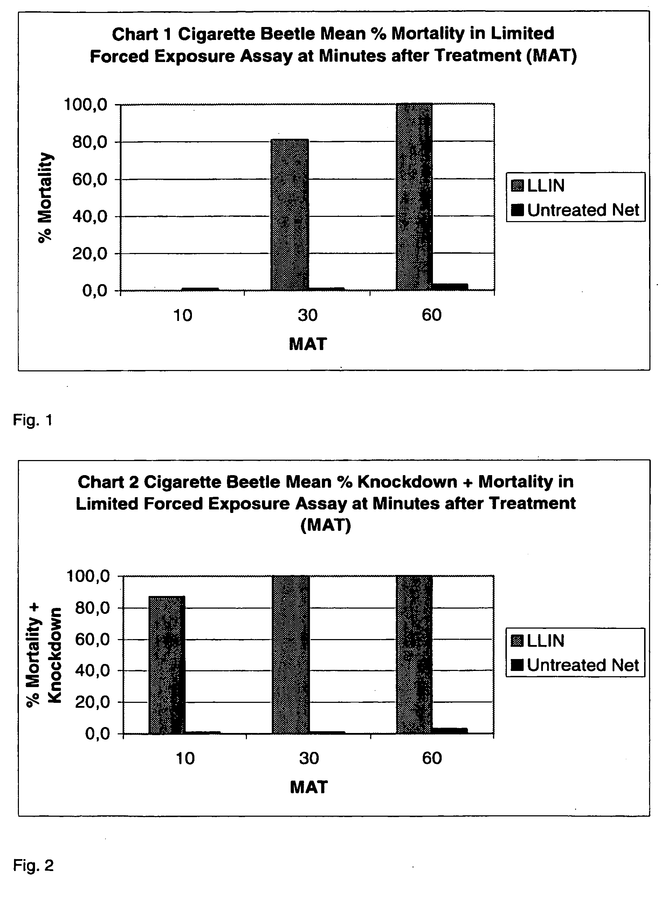

1. Alphacypermethrin-impregnated long-lasting insecticidal nets (LLINs) were efficacious against cigarette beetles, resulting in 87% knockdown + mortality after 10 minutes exposure and 100% mortality after 60 minutes exposure in a forced exposure assay (Table 1, Figures 1 and 2). Knocked down beetles were unable to recover:

**Table 1.**

| Efficacy of alphacypermethrin-impregnated long-lasting insecticidal nets (LLIN) against cigarette beetles, *Lasioderma serricorne,* in a limited forced exposure assay | | | | | | |
|---|---|---|---|---|---|---|
| Treatment | Mean % Mortality at Minutes after Treatment (MAT) | | | Mean % Knockdown + Mortality at Minutes after Treatment (MAT) | | |
| | 10 MAT | 30 MAT | 60 MAT | 10 MAT | 30 MAT | 60 MAT |
| Alphacypermethrin-impregnated LLIN | 0.0 | 81.0 | 100.0 | 87.0 | 100.0 | 100.0 |
| Untreated Net | 1.0 | 1.0 | 3.0 | 1.0 | 1.0 | 3.0 |

2. LLINs caused significantly greater mortality of cigarette beetles (93% at 1 day after treatment (DAT) and 100% at 4 DAT) compared to the untreated net in a behavioral assay where the beetles had to pass through the net to reach a food/light source:

**Table 2.**

| Efficacy of alphacypermethrin-impregnated long-lasting insecticidal nets (LLIN) against cigarette beetle, *Lasioderma serricorne,* adults in a behavioral assay | | |
|---|---|---|
| Treatment | Mean % Mortality at Days after Treatment (DAT) | |
| | 1 DAT | 4 DAT |
| Alphacypermethrin-impregnated LLIN | 92.7 | 100.0 |
| Untreated Net | 12.5 | 13.8 |

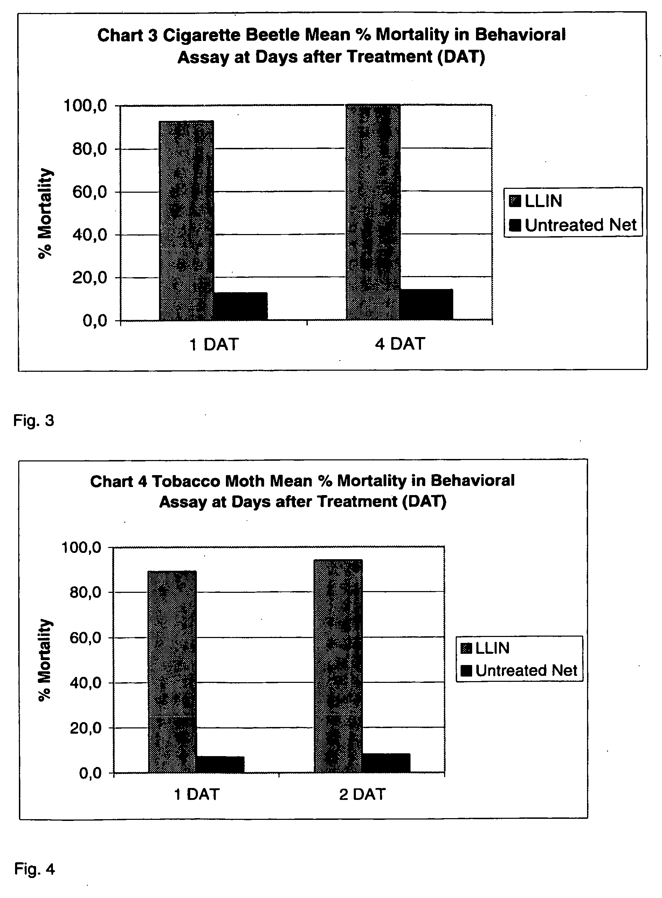

3. LLINs caused significantly greater mortality of tobacco moths (89 % at 1 DAT and 94 % at 2 DAT) compared to the untreated net in a behavioral assay where the moths had to pass through the net to reach a food/light source. Very few moths able to pass through the untreated net or LLIN, indicating utility of (2 mm x 2 mm) LLINs for use as a physical and chemical barrier for protection of stored tobacco from tobacco moth infestations (Table 3, Figure 4):

**Table 3.**

| Efficacy of alphacypermethrin-impregnated long-lasting insecticidal nets (LLIN) against tobacco moth, *Ephestia elutella,* adults in a behavioral assay | | |
|---|---|---|
| Treatment | Mean % Mortality at Days after Treatment (DAT) | |
| | 1 DAT | 2 DAT |
| Alphacypermethrin-impregnated LLIN | 89.1 | 94.0 |
| Untreated Net | 7.0 | 9.0 |

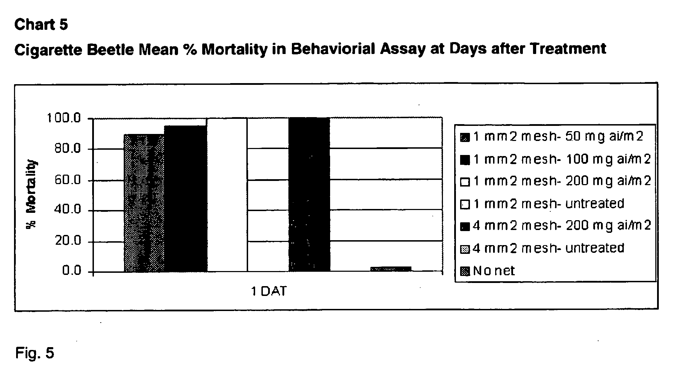

4. LLINs caused significantly greater mortality of to cigarette beetles compared to the untreated net in a behavioral assay where the beetles had to pass through the net to reach a food/light source. No beetles were able to pass through the untreated net or LLIN, indicating utility of (1 mm x 1 mm) LLINs at different a.i. levels for use as a physical and chemical barrier for protection of stored tobacco cigarette beetle infestations (Table 4, Figure 5):

**Table 4**

| Efficacy of alphacypermethrin-impregnated long-lasting insecticidal nets (LUN) against cigarette beetle, *Lassioderma serricone, in a behavioral assay* | | |
|---|---|---|
| Mean % Cigarette Beetle Mortality at Days after Treatment | | |
| Treatment | 1 DAT | 2 DAT |
| 1 mm² mesh- 50 mg ai/m² | 90.0 | 100.0 |
| 1 mm² mesh- 100 mg ai/m² | 95.0 | 95.5 |
| 1 mm² mesh- 200 mg ai/m² | 100.0 | 100.0 |
| 1 mm² mesh- untreated | 0.0 | 0.0 |
| 4 mm² mesh- 200 mg ai/m² | 100.0 | 100.0 |
| 4 mm² mesh- untreated | 0.0 | 0.0 |
| No net | 2.5 | 2.5 |

## Claims

1. A method for protecting tobacco from harmful organisms during storage, comprising the step of covering the tobacco with a material which has a protective activity against the harmful organisms, wherein the material is a netting.

2. The method as claimed in claim 1, wherein the material is a textile material, plastic material or a cellulose containing material.

3. The method as claimed in claim 1 or 2, wherein the material is a netting with a mesh size (side length of a mesh) of 1.5 mm as an upper limit.

4. The method as claimed in any of claims 1 to 3, wherein the material is treated with a composition comprising:
a. at least one pesticide (component A), and
b. at least one polymeric binder (component B).

5. The method as claimed in claim 4, wherein the composition comprises (based on the total content of A and B), 0.001 to 95 wt.% of at least one pesticide, and 5 to 99.999 wt.-% of at least one polymeric binder.

6. The method as claimed in claim 4 or 5, wherein the pesticide is selected from pyrethroid compounds, carbamate compounds, organophosphorous compounds, N-arylhydrazine derivatives, molluscicides, rodenticides, and fungicides.

7. The method as claimed in claim 6, where the pyrethroid compounds are selected from Etofenprox, Chlorfenapyr, Fenvalerate, Esfenvalerate, Fenpropathrin, Cypermethrin, alpha-Cypermethrin, Permethrin, Cyhalothrin, Deltamethrin, Cycloprothrin, Fluvalinate, Bifenthrin, Tralomethrin, Silafluofen, D-Fenothrin, Cyphenothrin, D-Resmethrin, Acrinathrin, Cyfluthrin, Tefluthrin, Transfluthrin, Tetramethrin, Allethrin, Prallethrin, Empenthrin, Imiprothrin, D-Flamethrin, Pyriproxyfen and Pyrethrum.

8. The method as claimed in any of claims 4 to 7, wherein the polymer binder is selected from the group consisting of polyacrylates, polymethacrylates, polyacrylonitrile, polymaleic acid anhydride, polystyrene, poly(methyl)styrene, polybutadiene, polyvinylacetate, polyvinylalcohol as well as copolymers obtained by polymerization of at least two different ethylenically unsaturated monomers of the group of monomers mentioned above and blends of said homopolymers and/or copolymers, for example, poly(styrene-acrylates), poly(styrene-butadiene), ethylene-acrylate-copolymers, ethylene-vinylacetate-copolymers, which may be partially or completely hydrolyzed, polyurethanes and/or or polyisocyanurates, blends comprising polyurethanes and/or polyisocyanurates, preferably blends comprising polyurethanes and/or polyisocyanurates and polycarbonates; mineral waxes, zirconium waxes, silicones, polysiloxanes, fluorinated polyacrylates and methacrylates, fluorosilicones, and fluorocarbon resins
melamine formaldehyde condensation resins, methylol urea derivatives; and curable polyesters
and
blends or preparations comprising at least one of said polymeric binders.

9. The method as claimed in any of claims 4 to 8, wherein the polymeric binder is an acrylic binder, obtained by radical polymerization of at least one monomer of formula II 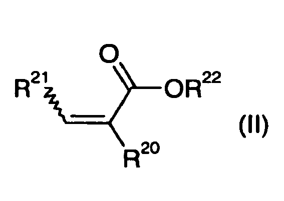 wherein
R²⁰, R²¹ and R²² are independently selected from C₁- to C₁₀-alkyl, which is optionally fluoro substituted and which may be linear or branched, for example methyl, ethyl, n-propyl, i-propyl, n-butyl, i-butyl, sec-butyl, t-butyl, n-pentyl, i-pentyl, sec-pentyl, neo-pentyl, 1,2-dimethylpropyl, i-amyl, n-hexyl, i-hexyl, sec-hexyl, n-heptyl, n-octyl, 2-ethylhexyl, n-nonyl, n-decyl, preferably C₁- to C₄-alkyl, for example methyl, ethyl, n-propyl, i-propyl, n-butyl, i-butyl, sec-butyl, tert-butyl; substituted or unsubstituted aryl, preferably substituted or unsubstituted C₆- to C₁₀-aryl, more preferably substituted or unsubstituted C₆-aryl, for example phenyl or tolyl;
R²⁰ and R²¹ may further be H.

10. The use of a material according to any of claim 1 to 9 which has a protective activity against harmful organisms for protecting tobacco from such organisms.

11. A device for protecting tobacco from harmful organisms comprising a device for storing the tobacco and a material according to any of claims 1 to 9, which has a protective activity against harmful organisms, for covering the tobacco.

## Patentansprüche

1. Verfahren zum Schützen von Tabak vor schädlichen Organismen während der Lagerung, umfassend den Schritt des Bedeckens des Tabaks mit einem Material, das eine Schutzwirkung gegen schädliche Organismen hat, wobei das Material ein Gewebe ist.

2. Verfahren nach Anspruch 1, wobei das Material ein Textilmaterial, ein Kunststoffmaterial oder ein cellulosehaltiges Material ist.

3. Verfahren nach Anspruch 1 oder 2, wobei das Material ein Gewebe mit einer Maschenweite (Seitenlänge einer Masche) von 1,5 mm als Obergrenze ist.

4. Verfahren nach einem der Ansprüche 1 bis 3, wobei das Material mit einer Zusammensetzung behandelt wird, die Folgendes umfasst:
a. mindestens ein Pestizid (Komponente A) und
b. mindestens ein polymeres Bindemittel (Komponente B).

5. Verfahren nach Anspruch 4, wobei die Zusammensetzung Folgendes umfasst (bezogen auf den Gesamtgehalt an A und B): 0,001 bis 95 Gew.-% mindestens eines Pestizids und 5 bis 99,999 Gew.-% mindestens eines polymeren Bindemittels.

6. Verfahren nach Anspruch 4 oder 5, wobei das Pestizid aus Pyrethroidverbindungen, Carbamatverbindungen, Organophosphorverbindungen, N-Arylhydrazin-Derivaten, Molluskiziden, Rodentiziden und Fungiziden ausgewählt ist.

7. Verfahren nach Anspruch 6, wobei die Pyrethroidverbindungen aus Etofenprox, Chlorfenapyr, Fenvalerat, Esfenvalerat, Fenpropathrin, Cypermethrin, alpha-Cypermethrin, Permethrin, Cyhalothrin, Deltamethrin, Cycloprothrin, Fluvalinat, Bifenthrin, Tralomethrin, Silafluofen, D-Fenothrin, Cyphenothrin, D-Resmethrin, Acrinathrin, Cyfluthrin, Tefluthrin, Transfluthrin, Tetramethrin, Allethrin, Prallethrin, Empenthrin, Imiprothrin, D-Flamethrin, Pyriproxyfen und Pyrethrum ausgewählt sind.

8. Verfahren nach einem der Ansprüche 4 bis 7, wobei das polymere Bindemittel aus der Gruppe ausgewählt ist, bestehend aus Polyacrylaten, Polymethacrylaten, Polyacrylnitril, Polymaleinsäureanhydrid, Polystyrol, Poly(methyl)styrol, Polybutadien, Polyvinylacetat, Polyvinylalkohol sowie aus Copolymeren, die durch Polymerisation von mindestens zwei verschiedenen ethylenisch ungesättigten Monomeren aus der vorstehend genannten Gruppe von Monomeren erhalten werden, und Gemischen dieser Homopolymere und/oder Copolymere, zum Beispiel Poly(styrol-Acrylate), Poly(styrol-Butadien), Ethylen-Acrylat-Copolymere, Ethylen-VinylacetatCopolymere, die teilweise oder vollständig hydrolysiert sein können, Polyurethanen und/oder Polyisocyanuraten, Gemischen, die Polyurethane und/oder Polyisocyanurate umfassen, vorzugsweise Gemischen, die Polyurethane und/oder Polyisocyanurate und Polycarbonate umfassen; mineralischen Wachsen, Zirkonwachsen, Silikonen, Polysiloxanen, fluorierten Polyacrylaten und -methacrylaten, Fluorsilikonen und Fluorkohlenwasserstoffharzen,
Melamin-Formaldehyd-, Kondensationsharzen, Methylolharnstoff-Derivaten und härtbaren Polyestern sowie
Gemischen und Zubereitungen, die mindestens eines dieser polymeren Bindemittel umfassen.

9. Verfahren nach einem der Ansprüche 4 bis 8, wobei das polymere Bindemittel ein Acryl-Bindemittel ist, das erhalten wird durch radikalische Polymerisation von mindestens einem Monomer der Formel II 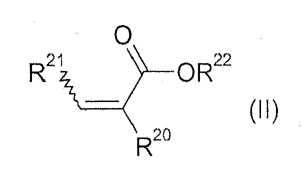 wobei
R²⁰, R²¹ und R²² unabhängig ausgewählt sind aus C₁- bis C₁₀-Alkyl, das gegebenenfalls fluorsubstituiert ist und das gerade oder verzweigt sein kann, zum Beispiel Methyl, Ethyl, n-Propyl, i-Propyl, n-Butyl, i-Butyl, sek.-Butyl, t-Butyl, n-Pentyl, i-Pentyl, sek.-Pentyl, neo-Pentyl, 1,2-Dimethylpropyl, i-Amyl, n-Hexyl, i-Hexyl, sek.-Hexyl, n-Heptyl, n-Octyl, 2-Ethylhexyl, n-Nonyl, n-Decyl, vorzugsweise aus C₁- bis C₄-Alkyl, zum Beispiel Methyl, Ethyl, n-Propyl, i-Propyl, n-Butyl, i-Butyl, sek.-Butyl, tert.-Butyl; substituiertem oder unsubstituiertem Aryl, vorzugsweise substituiertem oder unsubstituiertem C₆- bis C₁₀-Aryl, stärker bevorzugt substituiertem oder unsubstituiertem C₆-Aryl, zum Beispiel Phenyl oder Tolyl;
wobei R²⁰ und R²¹ zudem H sein können.

10. Verwendung eines Materials nach einem der Ansprüche 1 bis 9, das eine Schutzwirkung gegen schädliche Organismen hat, zum Schützen von Tabak vor solchen Organismen.

11. Vorrichtung zum Schützen von Tabak vor schädlichen Organismen, umfassend eine Vorrichtung zum Lagern des Tabaks und ein Material nach einem der Ansprüche 1 bis 9, das eine Schutzwirkung gegen schädliche Organismen hat, zum Abdecken des Tabaks.

## Revendications

1. Méthode de protection du tabac contre des organismes nuisibles lors du stockage, comprenant l'étape consistant à recouvrir le tabac d'un matériau ayant une activité protectrice contre les organismes nuisibles, dans laquelle le matériau est un filet.

2. Méthode selon la revendication 1, dans laquelle le matériau est un matériau textile, un matériau plastique ou un matériau cellulosique.

3. Méthode selon la revendication 1 ou 2, dans laquelle le matériau est un filet ayant une taille de maille (longueur de côté d'une maille) de 1,5 mm comme limite supérieure.

4. Méthode selon l'une quelconque des revendications 1 à 3, dans laquelle le matériau est traité par une composition comprenant :
a. au moins un pesticide (composant A), et b. au moins un liant polymère (composant B).

5. Méthode selon la revendication 4, dans laquelle la composition comprend (sur la base de la teneur totale en A et B) de 0,001 à 95% en poids d'au moins un pesticide, et de 5 à 99,999% en poids d'au moins un liant polymère.

6. Méthode selon la revendication 4 ou 5, dans laquelle le pesticide est sélectionné parmi les composés pyréthrinoïdes, les composés de carbamate, les composés organophosphorés, les dérivés de N-arylhydrazines, les molluscicides, les rodenticides et les fongicides.

7. Méthode selon la revendication 6, dans laquelle les composés pyréthrinoïdes sont sélectionnés parmi l'Etofenprox, le Chlorfénapyr, le Fenvalérate, l'Esfenvalérate, la Fenpropathrine, la Cyperméthrine, l'alpha-Cyperméthrine, la Perméthrine, la Cyhalothrine, la Deltaméthrine, la Cycloprothrine, le Fluvalinate, la Bifenthrine, la Tralométhrine, le Silafluofen, la D-Fénothrine, la Cyphénothrine, la D-Resméthrine, l'Acrinathrine, la Cyfluthrine, la Téfluthrine, la Transfluthrine, la Tétraméthrine, l'Alléthrine, la Pralléthrine, l'Empenthrine, l'Imiprothrine, la D-Flaméthrine, le Pyriproxyfen et le Pyréthrum.

8. Méthode selon l'une quelconque des revendications 4 à 7, dans laquelle le liant polymère est sélectionné dans le groupe constitué par les polyacrylates, les polyméthacrylates, les polyacrylonitriles, le poly(anhydride maléique), le polystyrène, le poly(méthyl)styrène, le polybutadiène, l'acétate de polyvinyle, l'alcool polyvinylique, ainsi que des copolymères obtenus par polymérisation d'au moins deux monomères différents à insaturation éthylénique issus du groupe des monomères mentionnés ci-dessus et des mélanges desdits homopolymères et/ou copolymères, par exemple les poly(styrène-acrylate), le poly(styrène-butadiène), les copolymères d'éthylène-acrylate, les copolymères d'éthylène-acétate vinylique, pouvant être partiellement ou totalement hydrolysés, les polyuréthanes et/ou les polyisocyanurates, des mélanges comprenant des polyuréthanes et/ou des polyisocyanurates, préférablement des mélanges comprenant des polyuréthanes et/ou des polyisocyanurates et des polycarbonates ; les cires minérales, les cires de zirconium, les silicones, les polysiloxanes, les polyacrylates et méthacrylates fluorés, les silicones fluorées et les résines fluorocarbonées,
les résines de condensation de mélamine-formaldéhyde, les dérivés de méthylol-urée ; et les polyesters durcissables, et
des mélanges ou des préparations comprenant au moins l'un desdits liants polymères.

9. Méthode selon l'une quelconque des revendications 4 à 8, dans laquelle le liant polymère est un liant acrylique, obtenu par polymérisation radicalaire d'au moins un monomère de formule II 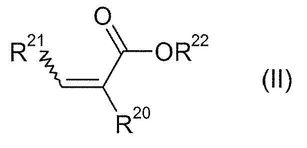 dans laquelle
R²⁰ R²¹ et R²² sont sélectionnés indépendamment parmi alkyle en C₁-C₁₀, éventuellement substitué par fluoro et pouvant être linéaire ou ramifié, par exemple méthyle, éthyle, n-propyle, i-propyle, n-butyle, i-butyle, sec-butyle, t-butyle, n-pentyle, i-pentyle, sec-pentyle, néopentyle, 1,2-diméthylpropyle, i-amyle, n-hexyle, i-hexyle, sec-hexyle, n-heptyle, n-octyle, 2-éthylhexyle, n-nonyle, n-décyle, de préférence alkyle en C₁-C₄, par exemple méthyle, éthyle, n-propyle, i-propyle, n-butyle, i-butyle, sec-butyle, tertio-butyle ; aryle substitué ou non substitué, de préférence aryle en C₆-C₁₀ substitué ou non substitué, plus préférablement aryle en C₆ substitué ou non substitué, par exemple phényle ou tolyle ;
R²⁰ et R²¹ peuvent en outre être H.

10. Utilisation d'un matériau selon l'une quelconque des revendications 1 à 9, qui possède une activité protectrice contre des organismes nuisibles, pour protéger le tabac contre de tels organismes.

11. Dispositif destiné à protéger le tabac contre des organismes nuisibles, comprenant un dispositif de stockage du tabac et un matériau selon l'une quelconque des revendications 1 à 9, qui possède une activité protectrice contre des organismes nuisibles, pour recouvrir le tabac.
